(19) **Europäisches Patentamt / European Patent Office / Office européen des brevets**

(11) **EP 1 432 953 B1**

(12) **FASCICULE DE BREVET EUROPEEN**

(45) Date de publication et mention
de la délivrance du brevet:
**09.12.2009 Bulletin 2009/50**

(21) Numéro de dépôt: **02800169.1**

(22) Date de dépôt: **01.10.2002**

(51) Int Cl.:
**F25B 17/00** *(2006.01)*

(86) Numéro de dépôt international:
**PCT/FR2002/003340**

(87) Numéro de publication internationale:
**WO 2003/029732 (10.04.2003 Gazette 2003/15)**

(54) **Procédé pour la production de froid ou chaleur par un système à sorption**

Verfahren zur Erzeugung von Kälte oder Wärme unter Verwendung eines Sorptionssystems

Method for producing refigeration or heat using a sorption system

(84) Etats contractants désignés:
**AT BE BG CH CY CZ DE DK EE ES FI FR GB GR IE IT LI LU MC NL PT SE SK TR**

(30) Priorité: **03.10.2001 FR 0112715**

(43) Date de publication de la demande:
**30.06.2004 Bulletin 2004/27**

(73) Titulaire: **CENTRE NATIONAL DE LA RECHERCHE SCIENTIFIQUE**
**75016 Paris Cédex (FR)**

(72) Inventeurs:
• **SPINNER, Bernard**
  **F-66100 Perpignan (FR)**
• **STITOU, Driss**
  **F-66570 ST NAZAIRE (FR)**

(74) Mandataire: **Sueur, Yvette et al**
**Cabinet SUEUR et L'HELGOUALCH,**
**109, boulevard Haussmann**
**75008 Paris (FR)**

(56) Documents cités:
| | |
|---|---|
| DE-A- 4 438 427 | FR-A- 725 959 |
| US-A- 4 523 635 | US-A- 4 623 018 |
| US-A- 5 174 367 | US-A- 5 351 493 |

**EP 1 432 953 B1**

## Description

La présente invention concerne un procédé pour la production de froid et/ou de chaleur par un système à sorption.

Lorsque la production d'énergie n'est pas située à proximité du lieu où l'énergie est requise, il est nécessaire de prévoir des moyens de transport. Le moyen de transport de l'énergie le plus répandu est constitué par les réseaux de distribution d'électricité. Il est cependant bien connu d'une part que le rendement de la conversion d'une énergie primaire en électricité ne dépasse guère 50%, et qu'en outre, le transport de l'électricité s'accompagne de pertes de l'ordre de 15%. Il est également connu de transporter l'énergie sous forme thermique pour la distribution de froid ou de chaleur, notamment dans les réseaux urbains ou industriels, à l'aide de fluides caloporteurs (tels que l'eau ou la vapeur par exemple) qui échangent de la chaleur avec le milieu à chauffer ou à refroidir. Ces types d'échange font intervenir dans la majorité des cas un échange de chaleur sensible ou de chaleur latente, ce qui engendre la recirculation de grands débits de fluide et par conséquent des pertes thermiques associées au niveau de température élevé ou bas du fluide caloporteur, ainsi qu'une consommation importante d'énergie de pompage.

On connaît des installations de production de chaleur ou de froid basées sur des systèmes thermochimiques, qui mettent en oeuvre des phénomènes renversables entre un gaz, dit gaz de travail, et un liquide ou un solide. Dans ces systèmes, l'étape de combinaison entre le gaz et le liquide ou le solide (absorption du gaz par le liquide, adsorption du gaz sur le solide, réaction entre le gaz et le solide) est exothermique, et l'étape inverse est endothermique. De très nombreux réacteurs et procédés reposant sur ces principes ont été décrits. On peut citer notamment US-4,531,374 (Alefeld) qui décrit plusieurs variantes d'un dispositif de production de froid ou de chaleur fondé sur des réactions renversables. Ces dispositifs fonctionnent par absorption renversable d'un gaz de travail par un liquide dans deux circuits de circulation de gaz de travail fonctionnant à deux ou trois niveaux de pression. Compte tenu des divers modes de fonctionnement décrits, l'utilisation d'un tel réacteur nécessite la mise en circulation de l'absorbant liquide entre l'un des réacteurs de l'un des circuits de circulation du gaz de travail et l'un des réacteurs de l'autre circuit. Cette mise en circulation de grandes quantités de liquide nécessite des moyens de pompage qui consomment des quantités d'énergie non négligeables, et d'importants moyens d'isolation pour éviter les pertes thermiques lors du transport du liquide. L'énergie fournie au dispositif au cours d'un cycle complet de fonctionnement est apportée tantôt à l'évaporateur fournissant le gaz de travail, tantôt au réacteur contenant le liquide enrichi en gaz, en vue de libérer le gaz, cet apport ayant donc lieu à des températures plus élevées que la température d'évaporation du gaz et entraînant par conséquent un coût plus élevé. En outre, US-4,523,635 et US-4,623,018 décrivent des systèmes qui fonctionnent par insertion renversable d'hydrogène dans des hydrures. Les systèmes comprennent au moins deux unités de fonctionnement constituées chacune par deux réacteurs contenant un hydrure et reliés par une conduite permettant la circulation de l'hydrogène. Selon US-4,523,635, lors d'un cycle de fonctionnement, la libération d'hydrogène à partir d'un premier hydrure est effectuée par apport de chaleur à température élevée au réacteur d'une unité de fonctionnement qui contient l'hydrure dont la température d'équilibre est la plus élevée. Dans le mode de fonctionnement décrit dans US-4,623,018, lors d'un cycle, il existe toujours au moins une étape au cours de laquelle de la chaleur est apportée par une source extérieure à un réacteur "haute température" de l'une des unités de fonctionnement.

La présente invention a pour but de fournir un procédé pour la production de froid et/ou de chaleur sur leur lieu d'utilisation, à partir d'une ou plusieurs sources d'énergie thermique, en évitant de transporter de la matière liquide ou solide, et en fournissant l'énergie nécessaire au fonctionnement de l'installation à un niveau de température relativement bas.

- Une installation pour la production de froid et/ou de chaleur utilisable selon la présente invention comprend un ensemble HP comprenant des réacteurs $R_1$ et $R'_1$, un ensemble BP comprenant des réacteurs $R_3$ et $R'_3$ et éventuellement un ensemble PI comprenant des réacteurs $R_2$ et $R'_2$. Dans la suite du texte, $R_i$ désigne l'un quelconque parmi les réacteurs $R_1$, $R_2$ et $R_3$, et $R'_i$ désigne l'un quelconque parmi les réacteurs $R'_1$, $R'_2$ et $R'_3$ dans laquelle:

- chaque réacteur Ri est le siège d'une sorption renversable produisant et consommant alternativement le gaz Gi,
- chaque réacteur $R'_i$ est le siège d'un phénomène renversable produisant et consommant alternativement le gaz $G_i$,
- les réactifs dans les réacteurs sont choisis de telle manière que, à une pression donnée: la température d'équilibre de la sorption dans le réacteur $R_i$ d'un ensemble soit supérieure à la température d'équilibre du phénomène renversable dans le réacteur $R'_i$ du même ensemble, la température d'équilibre de la sorption dans le réacteur $R_1$ soit inférieure à celle dans $R_3$, et le cas échéant la température d'équilibre de la sorption dans $R_2$ soit entre les températures d'équilibre dans $R_1$ et $R_3$ ;
- les réacteurs $R_i$ et $R'_i$ d'un ensemble sont munis de moyens pour échanger le gaz $G_i$
- les réacteurs $R_i$ sont munis de moyens pour échanger de la chaleur entre eux ;
- les réacteurs sont isolés de la pression atmosphérique; ladite installation comprenant des moyens pour fournir de la chaleur aux réacteurs $R'_1$, $R'_3$, et le cas échéant $R'_2$.

Un diagramme de Clapeyron représente la courbe d'équilibre (pression P, température T) d'un phénomène renversable, généralement sous la forme lnP = f(-1/T). La courbe d'équilibre théorique est une droite pour un phénomène monovariant tel qu'une réaction chimique ou un changement de phase liquide / gaz. La courbe d'équilibre est un réseau d'isostères pour les phénomènes bivariants tels que l'adsorption d'un gaz sur un solide ou l'absorption d'un gaz dans un liquide, du fait que le point d'équilibre varie en fonction de la concentration du gaz dans le solide ou le liquide. Compte tenu de la représentation adoptée, une courbe correspondant à un phénomène renversable donné située plus à gauche sur un diagramme de Clapeyron signifie que, à une pression donnée, la température de transformation est inférieure à celle d'un phénomène renversable dont la courbe d'équilibre serait située plus à droite sur le diagramme. Dans un ensemble donné de l'installation utilisable selon l'invention, la température dans le réacteur $R'_i$ est par conséquent inférieure à la température dans le réacteur $R_i$ lorsque les deux réacteurs sont en mis en communication par ouverture des moyens de transfert de gaz, c'est-à-dire lorsque les réacteurs sont à la même pression.

Dans une installation utilisable selon l'invention, les réacteurs $R_1$, $R'_1$ de l'ensemble HP fonctionnent par conséquent dans une domaine de (pression, température) $(PT)_1$ situé à un niveau globalement plus élevé que le domaine $(PT)_3$ de l'ensemble BP. L'ensemble PI, lorsque l'installation comprend trois ensembles, fonctionne dans un domaine $(PT)_2$ intermédiaire entre $(PT)_1$ et $(PT)_3$.

Les phénomènes renversables dans les réacteurs $R'_i$ peuvent être choisis parmi les changements de phase liquide/gaz et parmi les sorptions renversables telles que les réactions chimiques renversables, les adsorptions d'un gaz sur un solide, les absorptions d'un gaz par un liquide, la formation de clathrates hydrates.

Chaque réacteur $R_i$ est le siège d'une sorption renversable telle qu'une réaction chimique, une adsorption d'un gaz par un solide, une absorption d'un gaz par un liquide, ou la formation de clathrates hydrates.

Un changement de phase liquide/gaz $Li \leftrightarrows G_i$ est exothermique dans le sens de la condensation et endothermique dans le sens de l'évaporation. Une sorption renversable entre un sorbant liquide ou solide et un gaz, qui peut s'écrire $Bi + G_i \leftrightarrows (Bi, G_i)$ est exothermique dans le sens de la sorption Si et endothermique dans le sens de la désorption $D_i$.

De nombreuses combinaisons sont possibles à partir de ces phénomènes renversables et elles permettent d'atteindre des températures de production de froid utile ou de chaleur utile souhaitées.

Par exemple, dans les installations comprenant deux ensembles HP et BP, on peut utiliser dans les réacteurs $R'_i$ un phénomène renversable identique ou des phénomènes différents. Si les phénomènes dans les deux réacteurs $R'_i$ libèrent le même gaz, les sorbants dans les réacteurs $R_i$ doivent être différents. Si les phénomènes dans les réacteurs $R'_i$ libèrent des gaz différents, les sorbants dans les réacteurs $R_i$ peuvent être identiques ou différents.

De même, dans les installations comprenant trois ensembles HP, BP et PI, on peut utiliser dans les réacteurs $R'_i$ des phénomènes renversables libérant le même gaz G ou libérant des gaz $G_i$ différents. Les réacteurs $R_i$ associés à des réacteurs $R'_i$ qui libèrent le même gaz doivent contenir des sorbants différents. Lorsque les réacteurs $R'_i$ libèrent des gaz différents, les réacteurs $R_i$ qui leur sont associés peuvent contenir des sorbants identiques ou différents.

Dans un mode de réalisation particulier, les réacteurs $R'_i$ sont le siège de changement de phase liquide/gaz libérant le même gaz et chaque réacteur $R_i$ est le siège d'une sorption renversable entre ledit gaz et un liquide ou un solide différent.

Dans un autre mode de réalisation, chaque réacteur $R'_i$ est le siège de changement de phase liquide/gaz produisant un gaz différent et chaque réacteur est le siège d'une sorption mettant en jeu un solide ou un liquide différent.

Le procédé selon la présente invention pour la production de froid et/ou de chaleur en un lieu donné comprend une succession de phénomènes renversables entre un gaz et un liquide ou un solide, ledit procédé étant mis en oeuvre dans une installation qui comprend un ensemble HP comprenant des réacteurs $R_1$ et $R'_1$, un ensemble BP comprenant des réacteurs $R_3$ et $R'_3$ et éventuellement un ensemble PI comprenant des réacteurs $R_2$ et $R'_2$, dans laquelle chaque réacteur $R_i$ est le siège d'une sorption renversable produisant et consommant alternativement le gaz $G_i$ ; chaque réacteur $R'_i$ est le siège d'un phénomène renversable produisant et consommant alternativement le gaz $G_i$, les sorbants et gaz respectifs dans les réacteurs sont choisis de telle manière que, à une pression donnée : la température d'équilibre de la sorption dans le réacteur $R_i$ d'un ensemble soit supérieure à la température d'équilibre du phénomène renversable dans le réacteur $R'_i$ du même ensemble, la température d'équilibre de la sorption dans le réacteur $R_1$ soit inférieure à celle dans $R_3$, et le cas échéant la température d'équilibre de la sorption dans $R_2$ soit entre les températures d'équilibre dans $R_1$ et $R_3$; les réacteurs $R_i$ et $R'_i$ d'un ensemble sont munis de moyens pour échanger le gaz $G_i$ ; les réacteurs $R_i$ sont munis de moyens pour échanger de la chaleur entre eux ; et les réacteurs sont isolés de la pression atmosphérique ; ledit procédé étant **caractérisé en ce que :**

- les sources d'énergie thermique nécessaires au fonctionnement de l'installation alimentent les réacteurs $R'_1$, $R'_3$ et le cas échéant $R'_2$ ;.
- il comprend :

- une étape préliminaire dans laquelle les moyens d'échange de gaz entre deux réacteurs d'un ensemble sont fermés et on place les sorbants et gaz respectifs à température normale dans les réacteurs de telle sorte que le réacteur $R_1$ de l'ensemble HP contient le sorbant sous forme riche en gaz (B1,$G_1$), 1e réacteur $R'_1$ est en état de consommer le gaz $G_1$, le réacteur $R_3$ de l'ensemble BP contient le sorbant sous forme pauvre en gaz B3 et le réacteur $R'_3$ correspondant est en état de fournir du gaz $G_3$ ;
- une étape a) de production de froid et ou de chaleur, au cours de laquelle on ouvre les moyens d'échange de gaz entre les réacteurs $R_3$ et $R'_3$ d'une part, les réacteurs $R_1$ et $R'_1$, et le cas échéant entre les réacteurs $R_2$ et $R'_2$, éventuellement après avoir porté le réacteur $R'_3$ et 1e cas échéant $R'_2$ à une température supérieure à la température normale par apport d'énergie calorifique ;
- une étape b) de régénération au cours de laquelle on ouvre les moyens d'échange de gaz entre les réacteurs $R_3$ et $R'_3$ d'une part, les réacteurs $R_1$ et $R'_1$, et le cas échéant entre les réacteurs $R_2$ et $R'_2$, après avoir porté le réacteur $R'_1$ et le cas échéant $R'_2$ à une température supérieure à la température normale par apport d'énergie calorifique.

A la fin de l'étape de régénération, l'installation se trouve à nouveau en état de produire du froid ou de 1a chaleur. Il suffit alors de fermer les moyens d'échange de gaz entre les réacteurs d'un même niveau, pour maintenir l'installation dans cet état aussi longtemps que nécessaire. Lorsqu'on souhaite à nouveau produire du froid ou de la chaleur, il suffit de renouveler l'étape a) de production décrite ci-dessus, puis l'étape de régénération b), et ainsi de suite en fonction des besoins.

Dans un mode de réalisation particulier, visant essentiellement à produire du froid, le procédé de l'invention est **caractérisé en ce que :**

- le gaz et les sorbants respectifs dans l'ensemble BP (ou les ensembles BP et PI) sont choisis de telle sorte que, à la pression respective qui s'installe dans $R'_3$ (ou dans $R'_3$ et $R'_2$) après ouverture des moyens d'échange du gaz dans les réacteurs, la température d'équilibre du phénomène renversable dans $R'_3$ (ou dans $R'_3$ et dans $R'_2$) corresponde à la température à laquelle la production de froid est souhaitée.
- lors de l'étape a) de production, on ouvre les moyens d'échange de gaz entre les réacteurs sans apport préalable d'énergie calorifique au réacteur $R'_3$ (ou aux réacteurs $R'_3$ et $R'_2$) .

Dans une installation utilisable selon l'invention pour produire du froid, la température de production du froid est déterminée par la température à laquelle le gaz $G_i$ est libéré dans le réacteur $R'_i$ de l'ensemble BP ou des ensembles BP et PI qui sont dans les domaines de (pression, température) les plus bas. Les phénomènes renversables dans les deux réacteurs d'un ensemble BP (et éventuellement de l'ensemble PI) sont choisis de telle sorte que la simple mise en communication des réacteurs $R_i$ et $R'_i$ d'un même ensemble provoque de manière spontanée la libération endother-mique du gaz $G_i$ dans $R'_i$ et la phase de sorption dans $R_i$, avec prélèvement de l'énergie calorifique nécessaire sur le milieu ambiant, c'est-à-dire production de froid au niveau de $R'_i$. Le prélèvement spontané de l'énergie calorifique sur le milieu ambiant se traduit par la production de froid dans le réacteur $R'_3$ et le cas échéant dans le réacteur $R'_2$ lors de l'étape a). Ensuite, pour régénérer l'installation lors de l'étape b), on introduit de l'énergie calorifique par le réacteur $R'_i$ de l'ensemble ayant le domaine (pression, température) le plus élevé, et éventuellement de l'ensemble ayant le domaine (pression, température) intermédiaire, avant l'ouverture des moyens d'échange de gaz entre les réacteurs $R_i$ et $R'_i$. Parallèlement, l'installation restitue de l'énergie calorifique au cours de chacune des étapes, aux réacteurs $R'_i$ qui ne sont pas sollicités par l'introduction d'énergie et qui sont alors situés à des températures intermédiaires entre les températures faibles de production de froid et les températures élevées de régénération de l'installation. Si ces températures intermédiaires sont des températures utiles, l'installation peut être utilisée pour produire simultanément du froid et de la chaleur.

Dans une installation utilisable selon l'invention, comprenant deux ensembles HP et BP, le froid est produit à la température à laquelle le gaz est libéré dans le réacteur $R'_3$ de l'ensemble BP. Le procédé est mis en oeuvre dans les conditions suivantes:

- au cours d'une étape préliminaire,

  - les moyens de transfert de gaz entre $R_1$ et $R'_1$ d'une part, entre $R_3$ et $R'_3$ d'autre part sont fermés,
  - on introduit dans les réacteurs les sorbants et gaz respectifs de telle sorte que le réacteur $R_1$ de l'ensemble HP contienne le sorbant sous forme riche en gaz (B1,$G_1$), le réacteur $R'_1$ soit en état de consommer le gaz $G_1$, le réacteur $R_3$ de l'ensemble BP contienne le sorbant sous forme pauvre en gaz B3 et le réacteur $R'_3$ corres-pondant soit en état de fournir du gaz $G_3$,
  - le gaz et les sorbants respectifs dans l'ensemble BP sont choisis de telle sorte que, à la pression respective qui s'installe dans $R'_3$ après ouverture des moyens d'échange du gaz, la température d'équilibre du phénomène

renversable dans $R'_3$ corresponde à la température à laquelle la production de froid est souhaitée ;

- au cours de l'étape a) qui est l'étape de production de froid, on ouvre les moyens de transfert de gaz entre les réacteurs $R_3$ et $R'_3$ d'une part et entre les réacteurs $R_1$ et $R'_1$ d'autre part, ce qui provoque la libération spontanée de gaz $G_3$ dans $R'_3$, la sorption exothermique de $G_3$ avec le sorbant B3 dans $R_3$, la désorption endothermique du sorbant riche en gaz (B1,$G_1$) dans $R_1$, la consommation exothermique du gaz $G_1$ dans $R'_1$ ;
- au cours de l'étape b) qui est l'étape de régénération, on fournit de l'énergie calorifique à $R'_1$ pour le porter à une température supérieure à la température normale, on ouvre les moyens de transfert de gaz entre les réacteurs $R_3$ et $R'_3$ d'une part et entre les réacteurs $R_1$ et $R'_1$ d'autre part, ce qui provoque la libération de gaz $G_1$ dans $R'_1$, la sorption exothermique de $G_1$ avec le sorbant B1 dans $R_1$, la désorption endothermique du sorbant riche en gaz (B3,G3) dans $R_3$, la consommation exothermique du gaz G3 dans $R'_3$.

A la fin de l'étape b), l'installation est à nouveau en état de produire du froid. Il suffit de mettre en relation les réacteurs $R_3$ et $R'_3$ de l'ensemble BP. Dans une telle installation, le froid est produit dans $R'_3$ et la régénération est effectuée par $R'_1$. Seul le réacteur $R'_3$ siège de la production de froid est nécessairement situé sur le lieu où la production de froid est requise. Le réacteur $R'_1$ alimenté en énergie calorifique lors de 1a régénération de l'installation est situé sur le lieu où l'énergie calorifique est disponible et les autres réacteurs sont situés à tout endroit approprié, c'est-à-dire à n'importe quelle distance du lieu de production de froid. Il est ainsi possible de produire du froid en un lieu donné à partir d'une source d'énergie calorifique située ailleurs, par simple circulation de gaz à une température quelconque, sans transport de liquide ou de solide chaud ou froid. On élimine ainsi toutes les difficultés liées au transport proprement dit de solides ou de gaz, ainsi que les pertes thermiques.

Le fonctionnement d'une installation à deux ensembles tel que décrit ci-dessus est analogue, que les gaz respectifs $G_1$ et $G_3$ soient identiques ou différents.

Dans une installation comprenant trois ensembles, plusieurs modes de production de froid peuvent être envisagés. Le froid peut être produit à deux températures différentes au cours d'un même cycle de production. Le froid peut être produit à une température donnée en deux phases successives lors de l'étape de production a). Le froid peut en outre être produit à une température donnée en une seule phase au cours de l'étape a), l'étape de régénération s'effectuant alors en deux phases.

Pour la production de froid à deux températures différentes, on met en oeuvre le procédé dans une installation qui comprend trois ensembles HP, BP et PI comprenant respectivement les réacteurs $R_1,R'_1$, $R_3,R'_3$, et $R_2,R'_2$, dans les conditions suivantes:

- au cours d'une étape préliminaire,

  • on ferme les moyens d'échange de gaz entre les réacteurs $R_1,R'_1$, $R_3,R'_3$, et $R_2,R'_2$,
  • on introduit dans les réacteurs les sorbants et gaz respectifs de telle sorte que le réacteur $R_1$ de l'ensemble HP contienne le sorbant sous forme riche en gaz (B1,$G_1$), le réacteur $R'_1$ soit en état de consommer le gaz $G_1$, les réacteurs $R_3$ et $R_2$ des ensembles BP et PI contiennent leur sorbant sous forme pauvre en gaz, respectivement B3 et B2, et les réacteurs $R'_3$ et $R'_2$ soient en état de fournir les gaz respectifs $G_3$ et $G_2$,
  • le gaz et les sorbants respectifs dans les ensembles BP et PI sont choisis de telle sorte que, aux pressions respectives qui s'installent dans $R'_3$ et $R'_2$ après ouverture des moyens d'échange du gaz, les températures d'équilibre des phénomènes renversables respectifs dans $R'_2$ et $R'_3$ correspondent aux températures auxquelles la production de froid est souhaitée ;

- au cours de l'étape a) on ouvre les moyens d'échange de gaz entre les réacteurs $R_1,R'_1$, $R_3,R'_3$ et $R_2$, $R'_2$, ce qui provoque la libération spontanée de $G_3$ dans $R'_3$ et de $G_2$ dans $R'_2$, la sorption exothermique de $G_3$ avec le sorbant B3 dans $R_3$, la sorption exothermique de $G_2$ avec le sorbant B2 dans $R_2$, la désorption endothermique du sorbant riche en gaz (B1,$G_1$) dans $R_1$, la consommation exothermique du gaz $G_1$ dans $R'_1$ ;
- au cours de l'étape b), on apporte de l'énergie calorique à $R'_1$, puis on ouvre les moyens d'échange de gaz entre les réacteurs $R_1,R'_1$, $R_3,R'_3$ et $R_2,R'_2$, ce qui provoque la libération de gaz $G_1$ dans $R'_1$, la sorption exothermique de $G_1$ avec le sorbant B1 dans $R_1$, la désorption endothermique du sorbant riche en gaz (B3,G3) dans $R_3$, la consommation exothermique du gaz G3 dans $R'_3$, la désorption endothermique du sorbant riche en gaz (B2,2) dans $R_2$, et la consommation exothermique du gaz G2 dans $R'_2$.

Au cours de l'étape a), on constate la production de froid dans $R'_3$ et $R'_2$. Au cours de l'étape b), on régénère l'installation en fournissant de l'énergie calorifique à $R'_1$. On peut ainsi produire du froid par simple circulation de gaz à une température normale, sur le lieu où sont situés $R'_3$ et $R'_2$, les autres parties de l'installation ainsi que la source de chaleur alimentant $R'_1$ étant situées ailleurs.

Pour la production de froid en deux phases lors de l'étape de production du froid, on met en ouvre le procédé dans une installation qui comprend trois ensembles HP, BP et PI comprenant respectivement les réacteurs $R_1, R'_1$, $R_3$, $R'_3$, et $R_2, R'_2$, dans les conditions suivantes:

- au cours d'une étape préliminaire,

  • on ferme les moyens d'échange de gaz entre les réacteurs $R_1, R'_1$, $R_3, R'_3$, et $R_2, R'_2$,
  • on introduit dans les réacteurs les sorbants et gaz respectifs choisis de telle sorte que les réacteurs $R_1$ et $R_2$ contiennent leur sorbant respectif sous forme riche en gaz $(B1, G_1)$ et $(B2, G_2)$, les réacteurs $R'_1$ et $R'_2$ soient en état de consommer le gaz respectif $G_1$ et $G_2$, le réacteur $R_3$ contienne le sorbant sous forme pauvre en gaz B3, et le réacteur $R'_3$ soit en état de fournir le gaz ;

- au cours de l'étape a) dans une première phase, on ouvre les moyens d'échange de gaz entre les réacteurs $R_3$, $R'_3$ d'une part et entre les réacteurs $R_2, R'_2$ d'autre part, ce qui provoque la libération spontanée de $G_3$ dans $R'_3$ avec production de froid, la sorption exothermique de $G_3$ avec le sorbant B3 dans $R_3$, la désorption endothermique du sorbant riche en gaz $(B2, G_2)$ dans $R_2$, la consommation exothermique de $G_2$ dans $R'_2$ ; dans une deuxième phase, on ouvre les moyens d'échange de gaz entre les réacteurs $R_1, R'_1$ d'une part et les réacteurs $R_2, R'_2$ d'autre part, ce qui provoque la libération spontanée de $G_2$ dans $R'_2$ avec production de froid, la sorption exothermique de $G_2$ avec le sorbant B2 dans $R_2$, la désorption endothermique du sorbant riche en gaz $(B1, G_1)$ dans $R_1$, la consommation exothermique du gaz $G_1$ dans $R'_1$ ;
- au cours de l'étape b), on fournit de l'énergie calorifique à $R'_1$ pour le porter à une température supérieure à la température normale, puis on ouvre les moyens de transfert de gaz entre les réacteurs $R_1, R'_1$ d'une part et les réacteurs $R_3, R'_3$ d'autre part, ce qui provoque la libération de gaz $G_1$, la sorption exothermique de $G_1$ avec le sorbant B1 dans $R_1$, la désorption endothermique du sorbant riche en gaz $(B3, G_3)$ dans $R_3$, et la consommation exothermique du gaz $G_3$ dans $R'_3$.

A la fin de l'étape b), l'installation est à nouveau en mesure de produire du froid. La simple mise en contact de $R'_3$ et de $R_3$ permet de redémarrer le processus. Dans ce cas particulier, les réacteurs $R'_3$ et $R'_2$ peuvent être placés au même lieu ou en des lieux différents, suivant que l'on souhaite produire du froid en un ou deux lieux, à partir d'une source d'énergie calorifique alimentant le réacteur $R'_1$ située ailleurs. Tous les gaz ou certains gaz peuvent être identiques dans l'installation. Si les réacteurs $R'_3$ et $R'_2$ sont le siège du même phénomène renversable mettant en jeu le même gaz, le froid sera produit à la même température dans les deux phases de l'étape de production. Ce mode de mise en oeuvre permet une augmentation du rendement de la production de froid.

Pour la production de froid en une phase lors de l'étape de production de froid, on met en oeuvre le procédé dans une installation qui comprend trois ensembles HP, BP et PI comprenant respectivement les réacteurs $R_1, R'_1$, $R_3$, $R'_3$, et $R_2, R'_2$, dans les conditions suivantes:

- au cours d'une étape préliminaire,

  • on ferme les moyens d'échange de gaz entre les réacteurs $R_1, R'_1$, $R_3, R'_3$, et $R_2, R'_2$,
  • on introduit dans les réacteurs $R_i$ et les réacteurs $R'_i$ les sorbants et gaz respectifs choisis de telle sorte que les réacteurs $R_1$ et $R_2$ contiennent leur sorbant respectif sous forme riche en gaz $(B1, G_1)$ et $(B2, G_2)$, les réacteurs $R'_1$ et $R'_2$ soient en état de consommer le gaz respectif $G_1$ et $G_2$, le réacteur $R_3$ contienne le sorbant sous forme pauvre en gaz B3, et le réacteur $R'_3$ soit en état de fournir le gaz ;

- au cours de l'étape a) on ouvre les moyens de transfert de gaz entre les réacteurs $R_3, R'_3$ d'une part et les réacteurs $R_1, R'_1$ d'autre part, ce qui provoque la libération spontanée de $G_3$ dans $R'_3$, la sorption exothermique de $G_3$ avec le sorbant B3 dans $R_3$, la désorption endothermique du sorbant riche en gaz $(B1, G_1)$ dans $R_1$, la consommation exothermique du gaz $G_1$ dans $R'_1$ ;
- au cours de l'étape b), dans une première phase, on apporte de l'énergie calorifique à $R'_1$ et on met en connexion les réacteurs $R_1, R'_1$ d'une part et les réacteurs $R_2, R'_2$ d'autre part, ce qui provoque la libération spontanée de $G_1$, la sorption exothermique de $G_1$ avec le sorbant B1 dans $R_1$, la désorption endothermique du sorbant riche en gaz $(B2, G_2)$ dans $R_2$, et la consommation exothermique du gaz $G_2$ dans $R'_2$ ; dans une deuxième phase, on apporte de l'énergie calorifique à $R'_2$, puis on met en connexion les réacteurs $R_2, R'_2$ d'une part et les réacteurs $R_3, R'_3$ d'autre part, ce qui provoque la libération de gaz $G_2$, la sorption exothermique de $G_2$ avec le sorbant B2 dans $R_2$, la désorption endothermique du sorbant riche en gaz $(B3, G_3)$ dans $R_3$, et la consommation exothermique du gaz $G_3$ dans $R'_3$.

Ce mode de mise en oeuvre, dans lequel le froid est produit au réacteur R'$_3$ à partir de sources d'énergies alimentant les réacteurs R'$_1$ et R'$_2$ placés ailleurs, permet d'augmenter la capacité de production de froid.

Il apparaît ainsi que, dans tous les modes de mise en oeuvre du procédé de l'invention pour la production de froid, le froid est produit au niveau du réacteur R'$_3$ dans une installation à deux ensembles qui est régénérée par apport de chaleur au réacteur R'$_1$, ou au niveau du réacteur R'$_3$ (ou des réacteurs R'$_3$ et R'$_2$) dans une installation à trois ensembles qui est régénérée par apport de chaleur aux réacteurs R'$_2$ et R'$_1$ (ou au réacteur R'$_1$). Dans tous les cas, la ou les sources de chaleur utilisées pour la régénération de l'installation peuvent être placées à une certaine distance du lieu où le froid doit être produit. On peut ainsi produire du froid en un lieu donné, à partir d'une source d'énergie placée ailleurs, par simple transport du gaz de travail à température normale. Cette caractéristique, combinée à l'apport de chaleur aux réacteurs basse température d'un ensemble, permet donc une production de froid à distance et d'une manière plus économique que les installations de l'art antérieur.

Dans un autre mode de réalisation, visant essentiellement à produire en un lieu d'utilisation donné, de la chaleur à une température supérieure à la température d'une source d'énergie calorifique, le procédé de l'invention est **caractérisé en ce que**, lors de l'étape a) de production, on apporte de l'énergie calorifique à l'installation par 1e réacteur R'$_3$, et éventuellement par le réacteur R'$_2$, avant d'ouvrir les moyens d'échange de gaz entre les réacteurs R$_3$ et R'$_3$, et éventuellement entre les réacteurs R$_2$ et R'$_2$.

Dans une installation selon l'invention destinée à produire de la chaleur à une température supérieure à celle de la source d'énergie calorifique utilisé, lors de l'étape a) de production, on fournit à l'installation de l'énergie calorifique par le réacteur R'$_3$ de l'ensemble BP ou par les réacteurs R'$_3$ et R'$_2$ des ensembles BP et PI, et l'on récupère de la chaleur dans le réacteur R'$_1$ de l'ensemble HP ou par les réacteurs R'$_1$ et R'$_2$ des ensembles HP et PI, c'est-à-dire à la température élevée de fonctionnement de l'ensemble HP et le cas échéant de PI. La température à laquelle est produite la chaleur est déterminée par la température à laquelle le gaz G$_1$ est consommé dans le réacteur R'$_1$ et le cas échéant la température à laquelle le gaz G$_2$ est consommé dans le réacteur R'$_2$. Dans l'étape b) de régénération, on fournit de la chaleur au réacteur R'$_1$ et le cas échéant à R'$_2$, à une température analogue à celle de la source de 1'étape a), et on récupère de la chaleur dégradée dans le réacteur R'$_3$ et le cas échéant dans R'$_2$. La température à laquelle la chaleur est introduite dans R'$_1$ et éventuellement dans R$_2$ dans l'étape de régénération peut être inférieure à la température à laquelle la chaleur est introduite dans R'$_3$ lors de l'étape de production. EP-MOD

La chaleur Q produite à température élevée t au niveau du réacteur R'$_1$ (et éventuellement R'$_2$) peut être utilisée par exemple dans un échangeur de chaleur ou dans un procédé nécessitant de la chaleur à cette température élevée t. Cette utilisation libère une certaine quantité de chaleur Q' à une température inférieure $t_0$ telle que $Q' = Q[1-(t_0/t)]$ correspondant à l'exergie de la chaleur Q. Cette chaleur Q' peut avantageusement être utilisée dans l'étape b) pour initier la régénération de l'installation. Dans ce mode de mise en oeuvre particulier du procédé de l'invention pour la production de chaleur, il n'est donc pas nécessaire de disposer d'une source de chaleur extérieure à l'installation pour régénérer l'installation, et l'on peut produire au niveau de R'$_1$ (ou de R'$_1$ et R'$_2$) de la chaleur à température élevée à partir d'une ou plusieurs sources de chaleur disponibles ailleurs à plus basse température.

Pour la production de chaleur à une température donnée, le procédé de l'invention est mis en oeuvre dans une installation qui comprend un ensemble HP comprenant les réacteurs R$_1$ et R'$_1$ et un ensemble BP comprenant les réacteurs R$_3$ et R'$_3$, et il est **caractérisé en ce que:**

- au cours d'une étape préliminaire,

    • les moyens de transfert de gaz entre R$_1$ et R'$_1$ d'une part, entre R$_3$ et R'$_3$ d'autre part sont fermés,
    • on introduit dans les réacteurs les sorbants et gaz respectifs de telle sorte que le réacteur R$_1$ de l'ensemble HP contienne le sorbant sous forme riche en gaz (B1,G$_1$), le réacteur R'$_1$ soit en état de consommer le gaz G$_1$, le réacteur R$_3$ de l'ensemble BP contienne le sorbant sous forme pauvre en gaz B3 et le réacteur R'$_3$ correspondant soit en état de fournir du gaz G$_3$,

- au cours de l'étape a) de production de chaleur, on fournit de l'énergie calorifique à R'$_3$ pour le porter à une température supérieure à la température normale, puis on ouvre les moyens de transfert de gaz entre les réacteurs R$_3$ et R'$_3$ d'une part et les réacteurs R$_1$ et R'$_1$ d'autre part, ce qui provoque la libération spontanée de gaz G$_3$ dans R'$_3$, la sorption exothermique de G$_3$ avec le sorbant B3 dans R$_3$, la désorption endothermique du sorbant riche en gaz (B1,G$_1$) dans R$_1$, la consommation exothermique du gaz G$_1$ dans R'$_1$ avec production de chaleur ;
- au cours de l'étape b), on fournit de l'énergie calorifique à R'$_1$ pour le porter à une température supérieure à la température normale, puis on ouvre les moyens de transfert de gaz entre les réacteurs R$_3$ et R'$_3$ d'une part, et les réacteurs R$_1$ et R'$_1$, ce qui provoque la libération du gaz G$_1$ dans R'$_1$, la sorption exothermique de G$_1$ avec le sorbant B1 dans R$_1$, la désorption endothermique du sorbant riche en gaz (B3,G3) dans R$_3$, la consommation exothermique du gaz G3 dans R'$_3$, et la régénération de l'installation.

Compte tenu des courbes d'équilibre respectives des phénomènes renversables utilisés dans les différents réacteurs, l'énergie calorifique introduite lors de l'étape a) dans $R'_3$ et lors de l'étape b) dans $R'_1$ est à une température intermédiaire entre la température à laquelle on récupère de la chaleur dans $R'_1$ lors de l'étape a), et la température à laquelle on récupère de la chaleur dégradée dans $R'_3$ lors de l'étape b).

Dans un mode de réalisation particulier, le procédé de l'invention peut être mis en oeuvre pour produire en un lieu donné, une quantité de chaleur à une température supérieure à celle de deux sources de chaleur placées en un autre lieu. Dans ce cas, le procédé selon l'invention est mis en oeuvre dans une installation qui comprend trois ensembles HP, BP et PI comprenant respectivement les réacteurs $R_1,R'_1$, $R_3,R'_3$, et $R_2,R'_2$, dans les conditions suivantes:

- au cours d'une étape préliminaire,

  • on ferme les moyens d'échange de gaz entre les réacteurs $R_1,R'_1$, $R_3,R'_3$, et $R_2,R'_2$,
  • on introduit dans les réacteurs les sorbants et gaz respectifs choisis de telle sorte que le réacteur $R_1$ contienne le sorbant sous forme riche en gaz $(B1,G_1)$, le réacteur $R'_1$ soit en état de consommer le gaz $G_1$, les réacteurs $R_3$ et $R_2$ contiennent leur sorbant respectif sous forme pauvre en gaz B3 et B2, et les réacteurs $R'_3$ et $R'_2$ soient en état de fournir le gaz respectif $G_3$ et $G_2$ ;

- au cours de l'étape a), on fournit de l'énergie calorifique à $R'_3$ et $R'_2$ pour les porter à une température supérieure à la température normale, puis on ouvre les moyens d'échange de gaz entre les réacteurs $R_3,R'_3$, les réacteurs $R_2$, $R'_2$ et les réacteurs $R_1,R'_1$, ce qui provoque la libération spontanée de $G_3$ dans $R'_3$ et de $G_2$ dans $R'_2$, la sorption exothermique de $G_3$ avec le sorbant B3 dans $R_3$ et la sorption exothermique de $G_2$ avec le sorbant B2 dans $R_2$, la désorption endothermique du sorbant riche en gaz $(B1,G_1)$ dans $R_1$, la consommation exothermique de $G_1$ dans $R'1$ avec libération de chaleur;
- au cours de l'étape b), on fournit de l'énergie calorifique à $R'_1$ pour le porter à une température supérieure à la température normale, puis on ouvre les moyens de transfert de gaz entre les réacteurs $R_3,R'_3$, les réacteurs $R_2$, $R'2$ et les réacteurs $R_1,R'_1$, ce qui provoque la libération de gaz $G_1$ dans $R'_1$, la sorption exothermique de $G_1$ avec le sorbant B1 dans $R_1$, la désorption endothermique du sorbant riche en gaz $(B3,G_3)$ dans $R_3$ et du sorbant riche en gaz $(B2,G_2)$ dans $R_2$, ainsi que la consommation exothermique du gaz $G_3$ dans $R'_3$ et du gaz $G_2$ dans $R'_2$.

Dans ce mode de mise en oeuvre, la chaleur introduite dans les réacteurs $R'_2$ et $R'_3$ à une température intermédiaire est récupérée dans $R'_1$ à une température supérieure lors de l'étape de production, et la chaleur introduite dans $R'_1$ à une température intermédiaire est restituée à une température plus faible lors de l'étape de régénération.

Le procédé de l'invention permet en outre de produire de la chaleur en une phase au cours de l'étape de production, et de régénérer l'installation en deux phases successives. Le procédé est alors mis en oeuvre dans une installation qui comprend trois ensembles HP, BP et PI comprenant respectivement les réacteurs $R_1,R'_1$, $R_3,R'_3$, et $R_2$, $R'_2$, dans les conditions suivantes :

- au cours d'une étape préliminaire

  • on ferme les moyens de transfert de gaz entre les différents réacteurs
  • on introduit dans les réacteurs les sorbants et gaz respectifs, à température normale, de telle sorte que $R_1$ et $R_2$ contiennent leur sorbant respectif à l'état riche en gaz $(S1,G_1)$ et $(S2,G_2)$, $R_3$ contient le sorbant à l'état pauvre en gaz, $R'_1$ et $R'_2$ soient en état de consommer respectivement le gaz $G_1$ et le gaz $G_2$, et $r'_3$ soit en état de libérer le gaz $G_3$ ;

- au cours de l'étape a), on introduit de l'énergie calorifique dans $R'_3$, puis on ouvre les moyens de transfert de gaz entre les réacteurs $R_3,R'_3$ d'une part et les réacteurs $R_1,R'_1$ d'autre part, ce qui provoque la libération spontanée de $G_3$ dans $R_3$, la sorption exothermique de $G_3$ avec le sorbant B3 dans $R_3$, la désorption endothermique du sorbant riche en gaz $(B1,G_1)$ dans $R_1$, la consommation exothermique du gaz $G_1$ dans $R'_1$ avec production de chaleur à un niveau de température supérieur à celui de la source alimentant $R'_3$;
- au cours de l'étape b), dans une première phase, on introduit de l'énergie calorifique dans $R'_1$, puis on ouvre les moyens de transfert de gaz entre les réacteurs $R_1,R'_1$ d'une part et les réacteurs $R_2,R'_2$ d'autre part, ce qui provoque la libération spontanée de $G_1$, la sorption exothermique de $G_1$ avec le sorbant B1 dans $R_1$, la désorption endothermique du sorbant riche en gaz $(B2,G_2)$ dans $R_2$, et la consommation exothermique du gaz $G_2$ dans $R'_2$ ; dans une deuxième phase, on fournit de l'énergie calorifique à $R'_2$, puis on ouvre les moyens de transfert de gaz entre les réacteurs $R_2,R'_2$ d'une part et les réacteurs $R_3,R'_3$ d'autre part, ce qui provoque la libération de gaz $G_2$, la sorption exothermique de $G_2$ avec le sorbant B2 dans $R_2$, la désorption endothermique du sorbant riche en gaz $(B3,G_3)$ dans $R_3$, et la consommation exothermique du gaz $G_3$ dans $R'_3$.

Le procédé de l'invention permet en outre de produire de la chaleur en deux phases successives au cours de l'étape de production, et de régénérer l'installation en une phase. Le procédé est alors mis en oeuvre dans une installation qui comprend trois ensembles HP, BP et PI comprenant respectivement les réacteurs $R_1,R'_1$, $R_3,R'_3$, et $R_2,R'_2$, dans les conditions suivantes:

- au cours d'une étape préliminaire:

    • on ferme les moyens de transfert de gaz entre les différents réacteurs

    • on introduit dans les réacteurs les sorbants et gaz respectifs, à température normale, de telle sorte que $R_2$ contient le sorbant à l'état riche en gaz $(S2,G_2)$, $R_3$ et $R_1$ contient leur sorbant à l'état pauvre en gaz respectivement B3 et B1, $R'_2$ est en état de consommer le gaz $G_2$, et $R'_3$ et $R'_1$ sont en état de libérer le gaz respectivement $G_3$ et $G_2$;

- au cours de l'étape a) dans une première phase, on introduit de l'énergie calorifique dans $R'_3$, puis on met en connexion les réacteurs $R_3,R'_3$ d'une part et les réacteurs $R_2,R'_2$ d'autre part, ce qui provoque la libération spontanée de $G_3$, la sorption exothermique de $G_3$ avec le sorbant B3 dans $R_3$, la désorption endothermique du sorbant riche en gaz $(B2,G_2)$ dans $R_2$, la consommation exothermique de $G_2$ dans $R'_2$ avec production de chaleur à une température supérieure à celle de la source alimentant $R'_3$ ; dans une deuxième phase, on introduit de l'énergie calorifique dans $R'_2$, on met en connexion les réacteurs $R_1,R'_1$ d'une part et les réacteurs $R_2,R'_2$ d'autre part, ce qui provoque la libération spontanée de $G_2$, la sorption exothermique de $G_2$ avec le sorbant B2 dans $R_2$, la désorption endothermique du sorbant riche en gaz $(B1,G_1)$ dans $R_1$, la consommation exothermique du gaz $G_1$ dans $R'_1$ avec production de chaleur à une température supérieure à celle de la source alimentant $R'_2$;

- au cours de l'étape b), on fournit de l'énergie calorifique à $R'_1$, puis on ouvre les moyens de transfert de gaz entre les réacteurs $R_1,R'_1$ d'une part et les réacteurs $R_3,R'_3$ d'autre part, ce qui provoque la libération de gaz $G_1$, la sorption exothermique de $G_1$ avec le sorbant B1 dans $R_1$, la désorption endothermique du sorbant riche en gaz $(B3, G_3)$ dans $R_3$, et la consommation exothermique du gaz G dans $R'_3$ avec libération de chaleur à une température inférieure à celle de la source d'énergie alimentant $R'_1$.

Dans chaque cas particulier de production de chaleur, au cours de l'étape a), une quantité de chaleur est portée à une température plus élevée et se trouve valorisée, alors qu'au cours de l'étape b), une quantité de chaleur est portée à une température plus faible et constitue de la chaleur perdue si le niveau de faible température n'est pas utile.

La présente invention est décrite plus en détail à l'aide d'exemples de fonctionnement particuliers et par référence aux diagrammes de Clapeyron correspondants. La description est fondée sur des réacteurs $R'_i$ sièges d'un changement de phase liquide/gaz fonctionnant alternativement comme évaporateur et comme condenseur pour un gaz $G_i$. La transposition à des installations dans lesquelles les réacteurs $R'_i$ sont le siège d'une sorption monovariante ou divariante est à la portée de l'homme de métier. Dans le cas d'une sorption divariante, la droite d'équilibre dans le réacteur $R'_i$ correspondant serait un faisceau d'isostères. Sur les diagrammes, Ei et Ci désignent respectivement l'évaporation et la condensation du gaz $G_i$ dans le réacteur $R'_i$.

La figure 1 représente le diagramme de Clapeyron d'une installation utilisable selon l'invention comprenant deux ensembles fonctionnant avec deux solides et un gaz pour la production de froid.

La figure 2 représente le diagramme de Clapeyron d'une installation utilisable selon l'invention comprenant deux ensembles fonctionnant avec deux solides et deux gaz pour la production de froid.

La figure 3 représente le diagramme de Clapeyron d'une installation utilisable selon l'invention comprenant trois ensembles fonctionnant avec trois solides et un gaz pour la production de froid.

La figure 4 représente un autre diagramme de Clapeyron d'une installation utilisable selon l'invention comprenant trois ensembles fonctionnant avec trois solides et un gaz pour la production de froid.

La figure 5 représente un autre diagramme de Clapeyron d'une installation utilisable selon l'invention et comprenant trois ensembles fonctionnant avec trois solides et un gaz pour la production de froid.

La figure 6 représente le diagramme de Clapeyron d'une installation utilisable selon l'invention comprenant trois ensembles fonctionnant avec un solide et trois gaz pour la production de froid.

La figure 7 représente le diagramme de Clapeyron d'une installation utilisable selon l'invention comprenant deux ensembles fonctionnant avec deux solides et un gaz pour la production de chaleur.

La figure 8 représente le diagramme de Clapeyron d'une installation utilisable selon l'invention comprenant deux ensembles fonctionnant avec deux solides et deux gaz pour la production de chaleur.

La figure 9 représente le diagramme de Clapeyron d'une installation utilisable selon l'invention comprenant trois ensembles fonctionnant avec trois solides et un gaz pour la production de chaleur.

La figure 10 représente un autre diagramme de Clapeyron d'une installation utilisable selon l'invention comprenant trois ensembles fonctionnant avec trois solides et un gaz pour la production de chaleur.

La figure 11 représente un autre diagramme de Clapeyron d'une installation utilisable selon l'invention comprenant trois ensembles fonctionnant avec trois solides et un gaz pour la production de chaleur.

La figure 12 représente un cas particulier de diagramme de Clapeyron d'une installation utilisable selon l'invention comprenant deux ensembles fonctionnant avec un solide, un liquide et un gaz pour la production de froid.

La figure 13 représente un cas particulier de diagramme de Clapeyron d'une installation utilisable selon l'invention comprenant deux ensembles fonctionnant avec deux solides et un gaz pour la production de froid.

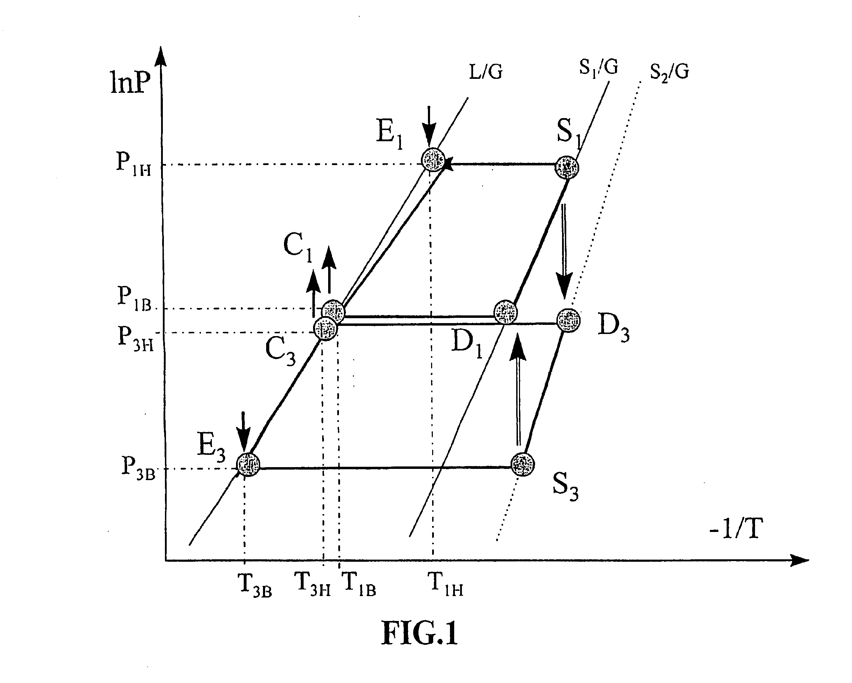

La production de froid dans une installation comprenant deux ensembles HP et BP dans lesquels les réacteurs $R'_1$ et $R'_3$ fonctionnent alternativement comme évaporateur/ condenseur pour le même gaz G et les réacteurs $R_1$ et $R_3$ contiennent des sorbants B1 et B3 différents, est illustré par le diagramme de Clapeyron représenté sur la figure 1. Les sorptions dans les réacteurs $R_1$ et $R_3$ sont des phénomènes monovariants. G, B1 et B3 sont choisis de telle sorte que, aux pressions respectives de fonctionnement, la température de la sorption S1 soit supérieure à la température de désorption D3 et que la température de la sorption exothermique S3 soit supérieure à la température de désorption D1.

- A l'état initial, les réacteurs $R'_1$ et $R'_3$ contiennent le gaz G sous forme liquide, le réacteur $R_1$ contient (B1,G) et le réacteur $R_3$ contient B3 ; $R_1$ et $R_3$ sont en contact thermique ; les ensembles HP et BP sont isolés de la pression atmosphérique et en relation thermique avec le milieu ambiant ;

- Au cours d'une première étape de fonctionnement, on produit du froid à la température $T_{3B}$ de la manière suivante: on met en communication $R_1$ avec $R'_1$, et $R_3$ avec $R'_3$; l'ensemble HP se place à la pression $P_{1B}$ et l'ensemble BP à la pression $P_{3B}$. Les conditions de pression et de température (P,T) dans lesquelles se trouvent alors les réacteurs $R'_3$, $R_3$, $R_1$ et $R'_1$ sont matérialisées respectivement par $E_3$, $S_3$, $D_1$ et $C_1$ sur le diagramme. Compte tenu de la très grande affinité entre $B_3$ et G, il se produit une évaporation spontanée de G dans $R'_3$. La quantité de chaleur $Q_3$ requise pour évaporer la quantité de gaz G nécessaire à la sorption S3 est prélevée spontanément sur le milieu extérieur, provoquant ainsi du froid à la température $T_{3B}$ ; simultanément, la quantité chaleur $Q'_3$ libérée dans $R_3$ par la sorption $S_3$ est transmise au contenu de $R_1$ et provoque la désorption D1 en libérant le gaz G. Ledit gaz G se transporte vers le réacteur $R'_1$ fonctionnant en tant que condenseur, où l'on constate un dégagement d'une quantité de chaleur $Q''_3$ à la température $T_{1B}$;

- Au cours d'une deuxième étape, on régénère l'installation : les moyens d'échange de gaz entre les réacteurs d'un même ensemble étant fermés, on introduit une quantité de chaleur $Q_1$ dans le réacteur $R'_1$ pour le porter à la température $T_{1H}$, ensuite on met en communication d'une part les réacteurs $R_1$,$R'_1$ et d'autre part les réacteurs $R_3$ et $R'_3$. Dans l'ensemble HP, la pression s'établit à la pression d'équilibre $P_{1H}$, ce qui provoque l'évaporation de G dans $R'_1$, la sorption exothermique S1 dans $R_1$, le transfert de la chaleur $Q'_1$ dégagée par la sorption S1 vers $R_3$ pour provoquer la désorption $D_3$, la libération du gaz G dans $R_3$ et sa condensation dans $R'_3$ avec libération d'une quantité de chaleur $Q''_3$ à la température $T_{3H}$. Les conditions (P,T) dans lesquelles se trouvent alors les réacteurs $R'_3$, $R_3$, $R_1$ et $R'_1$ sont matérialisées respectivement par les points $C_3$, $D_3$, $S_1$ et $E_1$ sur le diagramme. L'installation est alors à nouveau prête pour produire du froid. Si le réacteur $R_3$ et le réacteur $R'_3$ sont isolés l'un de l'autre à ce moment, l'installation stocke du froid potentiel. Le froid peut être produit à tout moment par simple mise en communication de $R_3$ et $R'_3$ à la pression $P_{3B}$.

Il apparaît ainsi que l'on peut produire du froid à la température $T_{3B}$ au lieu où est situé $R'_3$ en fournissant de l'énergie calorifique à un réacteur $R'_1$ qui peut être installé ailleurs, et notamment en un lieu où l'énergie calorifique est aisément disponible. Si les températures $T_{3H}$ et $T_{1B}$ sont des niveaux de température utiles, l'installation permet simultanément de produire du froid dans $R'_3$ et de la chaleur dans $R'_1$ lors de l'étape dite de production du froid, et de la chaleur dégradée dans $R'_3$ lors de l'étape de régénération à partir de la chaleur fournie à $R'_1$.

Le transport du froid est effectué par le simple transport du gaz G dans une conduite reliant le réacteur $R_1$ et le réacteur $R'_1$ et dans une conduite reliant le réacteur $R_3$ et le réacteur $R'_3$ qui lui est associé. Le gaz G et les sorbants B1 et $B_3$ utilisés sont choisis en fonction de la température à laquelle on souhaite produire le froid, et de la température de la source d'énergie calorifique disponible.

Le rendement théorique de production de froid d'une telle installation, qui peut s'écrire $\eta_P = Q_3/Q_1$, est le rapport de la quantité de chaleur utile $Q_3$ à la quantité de chaleur introduite. En pratique, il est voisin de 1.

Le rendement de transport, qui est défini par le rapport de la production utile dans un site distant ($Q_{P3}$) à la production utile effectuée in situ ($Q_{P1}$), peut s'écrire

$$\eta_t = Q_{P1}/Q_{P1}+W = 1-(perte/Q_{P1}+W)$$

W représentant le travail de pompage du gaz. Le transport d'énergie thermique avec une installation selon l'invention n'est pas accompagné de pertes thermiques, du fait que l'énergie est transportée sous forme chimique, par une simple circulation de gaz.

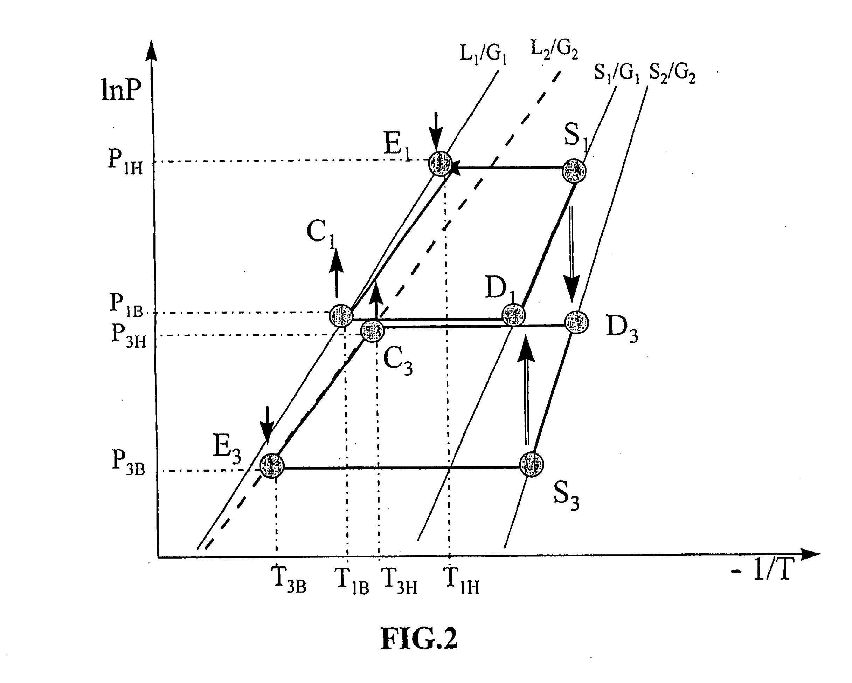

Un autre mode de mise en oeuvre de l'invention pour la production de froid, et éventuellement de chaleur utile, est illustré par la figure 2. L'installation est analogue à celle qui est utilisée pour le cas illustré par la figure 1, de même que la séquence des étapes successives. La différence réside dans le fait que l'ensemble HP fonctionne avec un gaz de travail $G_1$ et l'ensemble BP fonctionne avec un gaz de travail $G_3$ différent de $G_1$. A l'état initial, les réacteurs $R'_1$ et $R'_3$ contiennent les gaz respectifs $G_1$ et $G_3$ sous forme liquide, le réacteur $R_1$ contient $(B1,G_1)$ et le réacteur $R_3$ contient $B_3$. Comme dans l'exemple précédent, les conditions de pression et de température (P,T) dans lesquelles se trouvent alors les réacteurs $R'_3$, $R_3$, $R_1$ et $R'_1$ sont matérialisées respectivement par $E_3$, $S_3$, $D_1$ et $C_1$ sur le diagramme. Il en résulte que, au cours de la première étape de fonctionnement, la quantité $Q_3$ de froid produite dans $R'_3$ est à la température $T_{3B}$ qui est celle de l'évaporation de $G_3$ et la quantité de chaleur $Q''_3$ produite dans le réacteur $R'_1$ est à la température $T_{1B}$ qui est celle de la condensation de $G_1$. Au début de la deuxième étape, les conditions (P,T) dans lesquelles se trouvent alors les réacteurs $R'_3$, $R_3$, $R_1$ et $R'_1$ sont matérialisées respectivement par les points $C_3$, $D_3$, $S_1$ et $E_1$ sur le diagramme. Au cours de cette deuxième étape, la quantité de chaleur $Q_1$ requise pour évaporer la quantité de gaz $G_1$ nécessaire pour la sorption S1 est introduite à la température $T_{1H}$ qui est celle de l'évaporation de $G_1$ et la quantité de chaleur $Q''_1$ libérée dans $R'_3$ est à la température $T_{3H}$ qui est celle de la condensation de $G_3$.

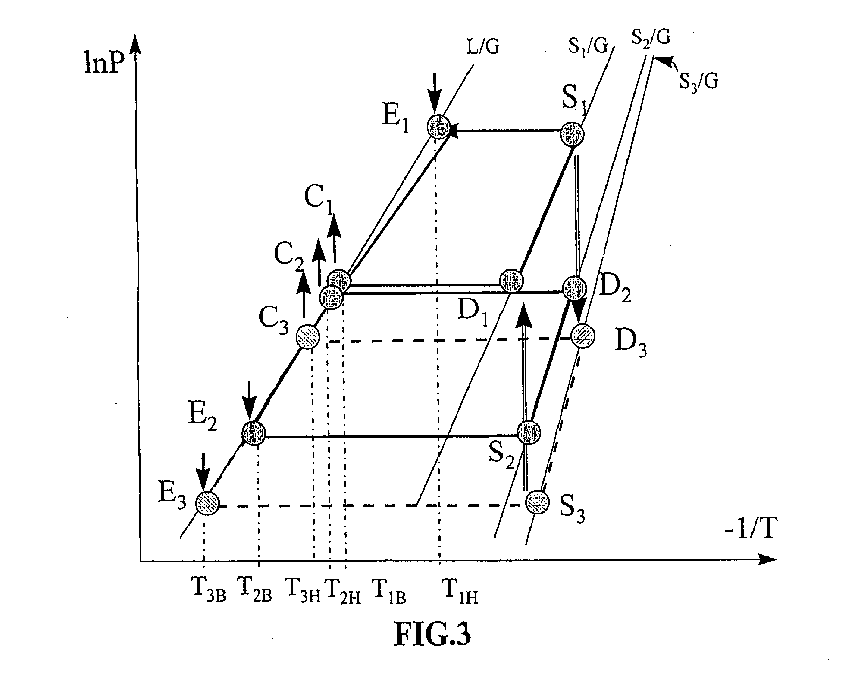

La figure 3 représente le diagramme de Clapeyron correspondant à une installation utilisable selon l'invention qui comprend trois ensembles HP, BP et PI. Dans ce cas particulier, le gaz G est identique dans les trois réacteurs $R_i$, et les sorbants Bi sont tous différents. Une telle installation permet de nombreuses variantes dans la production de froid. Elle permet notamment de produire du froid à deux températures différentes, successivement ou simultanément dans les réacteurs $R'_2$ et $R'_3$, par apport d'énergie calorifique en $R'_1$ lors de la régénération de l'installation. Le gaz G et les sorbants Bi sont choisis de telle sorte que, aux pressions respectives de fonctionnement, les températures des sorptions S2 et S3 soient sensiblement identiques entre elles et légèrement supérieures à la température de la désorption D1 et que la température de la sorption S1 soit légèrement supérieure aux températures des désorptions D2 et D3, lesdites températures de désorption étant substantiellement identiques. A l'état initial, les trois réacteurs $R'_i$ contiennent le gaz G sous forme liquide, le réacteur $R_1$ contient le sorbant sous la forme riche en gaz (B1,G) et les réacteurs $R_2$ et $R_3$ contiennent le sorbant sous forme pauvre en gaz, respectivement B2 et B3 ; les réacteurs $R_i$ et $R'_i$ d'un ensemble ne sont pas en communication l'un avec l'autre ; les réacteurs $R_i$ sont en communication thermique ; les ensembles sont isolés de la pression atmosphérique et en relation thermique avec le milieu ambiant.

- Au cours d'une première étape de fonctionnement, on produit du froid aux températures $T_{2B}$ et $T_{3B}$ de la manière suivante : on met en communication $R_1$ avec $R'_1$, $R_2$ avec $R'_2$ et $R_3$ avec $R'_3$ ; compte tenu de la très grande affinité entre B2 et G d'une part, et B3 et G d'autre part, il se produit une évaporation spontanée de G dans $R'_2$ et dans $R'_3$ (matérialisée respectivement par $E_2$ et $E_3$ sur la figure). La quantité de chaleur requise pour évaporer la quantité de gaz G nécessaire pour la sorption S2 et la quantité de chaleur requise pour évaporer la quantité de gaz G nécessaire pour la sorption S3 sont prélevées spontanément sur le milieu extérieur, provoquant ainsi du froid aux températures $T_{2B}$ et $T_{3B}$ ; simultanément, les quantités chaleur libérées respectivement dans $R_2$ et dans $R_3$ par la sorption sont transmises au contenu (B1,G) de $R_1$ et provoquent la désorption D2 en libérant le gaz G. Ledit gaz G se transporte vers le réacteur $R'_1$ fonctionnant en tant que condenseur (noté C1 sur la figure), où l'on constate un dégagement de chaleur à la température $T_{1B}$ ;
- Au cours d'une deuxième étape, on régénère l'installation, dans laquelle chacun des ensembles de réacteurs est à son niveau de pression élevé $P_{iH}$ : on introduit dans $R'_1$ qui fonctionne en tant qu'évaporateur (noté $E_1$ sur la figure), la quantité de chaleur requise pour le porter à la température $T_{1H}$, puis on met en communication les deux réacteurs de chaque ensemble, ce qui provoque l'évaporation de gaz G dans $R'_1$, et la sorption S1 dans $R_1$ ; la quantité de chaleur dégagée par la sorption est transmise au contenu des réacteurs $R_2$ et $R_3$ et provoque les désorptions D2 et D3 ; le gaz libéré est transmis aux réacteurs $R'_2$ et $R'_3$ dans lesquels il est condensé en libérant de la chaleur (notés respectivement $C_2$ et $C_3$ sur la figure) respectivement aux températures $T_{3H}$ et $T_{2H}$ ; à la fin de cette étape, l'installation est prête à fournir à nouveau du froid. Si chacun des réacteurs $R_2$ et $R_3$ est isolé du réacteur respectif $R'_2$ et $R'_3$ à ce moment, l'installation stocke du froid potentiel, qui peut être libéré à tout moment par simple mise en communication de $R_2$ et $R'_2$ d'une part et de $R_3$ et $R'_3$ d'autre part.

Pour produire du froid sélectivement à la température $T_{\overline{2B}}$ ou à la température $T_{3B}$, on effectue la première étape en mettant en connexion d'une part les réacteurs $R_1$ et $R'_1$ et d'autre part, soit les réacteurs $R_3$ et $R'_3$ si l'on veut produire du froid à $T_{3B}$, soit les réacteurs $R_2$ et $R'_2$.

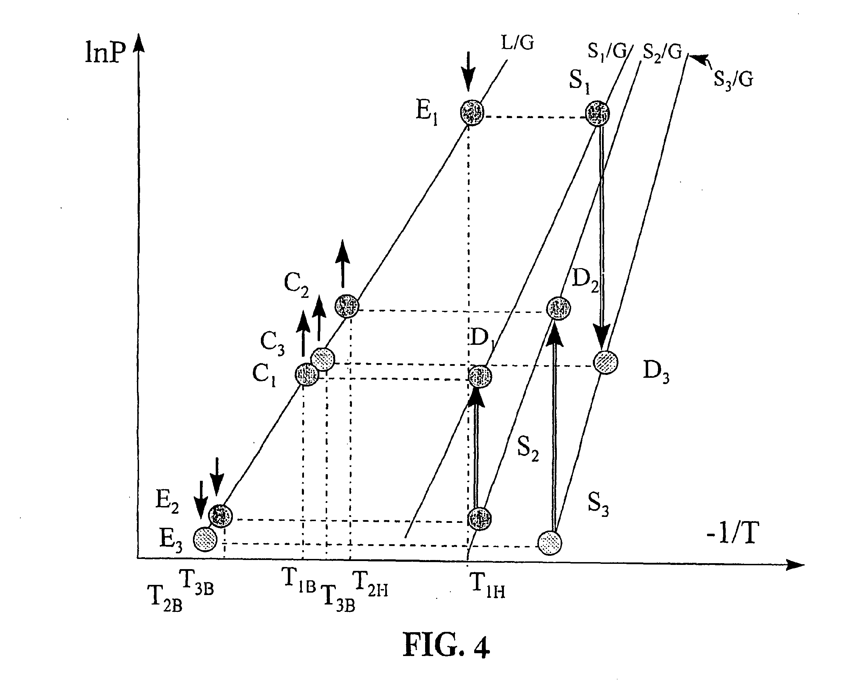

La figure 4 représente le diagramme de Clapeyron correspondant à une installation utilisable selon l'invention qui comprend trois ensembles de deux réacteurs. Comme dans le cas précédent, le gaz de travail G est identique dans les trois réacteurs $R_i$, et les sorbants Bi sont tous différents. Au démarrage du processus, le réacteur $R_3$ contient B3 et

les deux autres réacteurs contiennent respectivement (B1,G) et (B2,G), le tout à la température normale.

- Au cours d'une première étape, $R_3$ est mis en relation avec $R'_3$, et $R_2$ est mis en relation avec $R'_2$, ce qui déclenche l'évaporation de G avec production de froid à la température $T_{3B}$, la sorption S3 dans $R_3$ avec production de chaleur transmise à (B2,G) contenu dans $R_2$, ce qui provoque la désorption D2 et la libération de gaz G qui se condense en $R'_2$ avec libération de chaleur à la température $T_{2H}$. Les conditions (P,T) dans lesquelles se trouvent les réacteurs $R'_3$, $R_3$, $R_2$ et $R'_2$ au cours de cette étape sont matérialisées respectivement par les points $E_3$, $S_3$, $D_2$ et $C_2$ sur le diagramme ;
- au cours d'une deuxième étape, on provoque de la même manière la production de froid en $R'_2$ par mise en contact d'une part de $R_2$ et $R'_2$ et d'autre part de $R_1$ et $R'_1$, ce qui provoque la sorption S2 qui fournit à $R_1$ la chaleur nécessaire à la désorption D1 suivie de la production de chaleur à la température $T_{1B}$ due à la condensation dans $R'_1$ du gaz libéré. Les conditions (P,T) dans lesquelles se trouvent les réacteurs $R'_2$, $R_2$, $R_1$ et $R'_1$ au cours de cette étape sont matérialisées respectivement par les points $E_2$, $S_2$, $D_1$ et $C_1$ sur le diagramme. ;
- au cours d'une troisième étape, on régénère le système en fournissant de la chaleur à $R'_1$ pour le porter à la température $T_{1H}$, puis en mettant en contact de $R_3$ et $R'_3$ d'une part et $R_1$ et $R'_1$ d'autre part, pour libérer le gaz G en direction de $R_1$ pour la sorption S1. La chaleur libérée est transférée dans $R_3$ pour la désorption D3 et la production de chaleur dans $R'_3$ par condensation du gaz libéré. Les conditions (P,T) dans lesquelles se trouvent les réacteurs $R'_3$, $R_3$, $R_1$ et $R'_1$ au cours de cette étape sont matérialisées respectivement par les points $C_3$, $D_3$, $S_1$ et $E_1$ sur le diagramme. L'installation est alors prête pour une nouvelle séquence de production de froid.

Les températures de production de froid respectives $T_{2B}$ et $T_{3B}$ sont sensiblement les mêmes. Il est ainsi possible de produire une quantité de froid importante, puisqu'elle correspond à deux phénomènes d'évaporation.

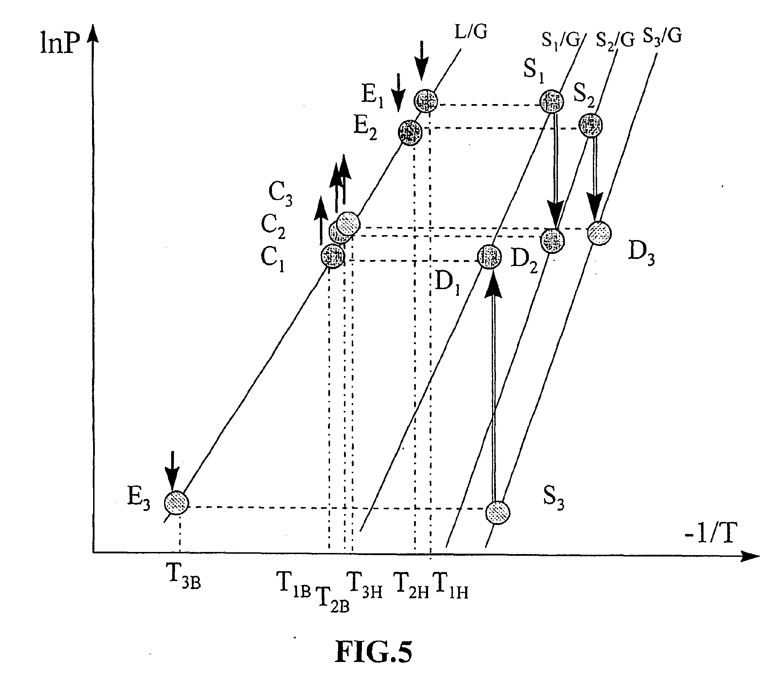

La figure 5 représente le diagramme de Clapeyron correspondant à une installation utilisable selon l'invention qui comprend trois ensembles de deux réacteurs. Comme dans le cas précédent, le gaz de travail G est identique dans les trois réacteurs $R_i$, et les sorbants Bi sont tous différents. Au démarrage du processus, le réacteur $R_3$ contient B3 et les deux autres réacteurs contiennent respectivement (B1,G) et (B2,G), à température normale. Une différence avec les exemples précédents réside dans le fait que, au cours de l'étape de production de froid, seul le réacteur $R_3$ fonctionne en mode sorption avec production de froid dans le réacteur $R'_3$ à la température $T_{3B}$.

- Au cours d'une première étape, la mise en relation de $R_3$ et $R'_3$ et de $R_1$ et $R'_1$ provoque l'évaporation spontanée du gaz G dans $R'_3$. Le gaz libéré G provoque la sorption S3 avec dégagement de chaleur qui est transférée vers $R_1$ pour y provoquer la désorption D1, la condensation du gaz libéré dans $R'_1$ avec production de chaleur à la température $T_{1B}$ ;
- au cours d'une deuxième étape, on apporte de la chaleur au réacteur $R'_1$ pour le porter à la température $T_{1H}$, puis on met en contact $R_1$ et $R'_1$ d'une part, $R_2$ et $R'_2$ d'autre part, ce qui a pour effet de libérer le gaz G nécessaire à la sorption S1 dans $R_1$, la chaleur dégagée étant transférée dans $R_2$ pour la désorption D2 et la libération de G qui se condense en $R'_2$ avec production de chaleur ;
- au cours d'une troisième étape, on apporte de la.chaleur à $R'_2$ pour le porter à la température $T_{2H}$, puis on met en contact $R_3$ et $R'_3$ d'une part, $R_2$ et $R'_2$ d'autre part, ce qui a pour effet de libérer le gaz G nécessaire à la sorption S2 dans $R_2$, la chaleur libérée étant transmise à $R_3$ pour la désorption de (B3,G) formé au cours de la première étape, de sorte que l'installation est régénérée pour une nouvelle séquence de production de froid à $T_{3B}$.

Ce mode de mise en oeuvre permet de produire du froid à une température très basse.

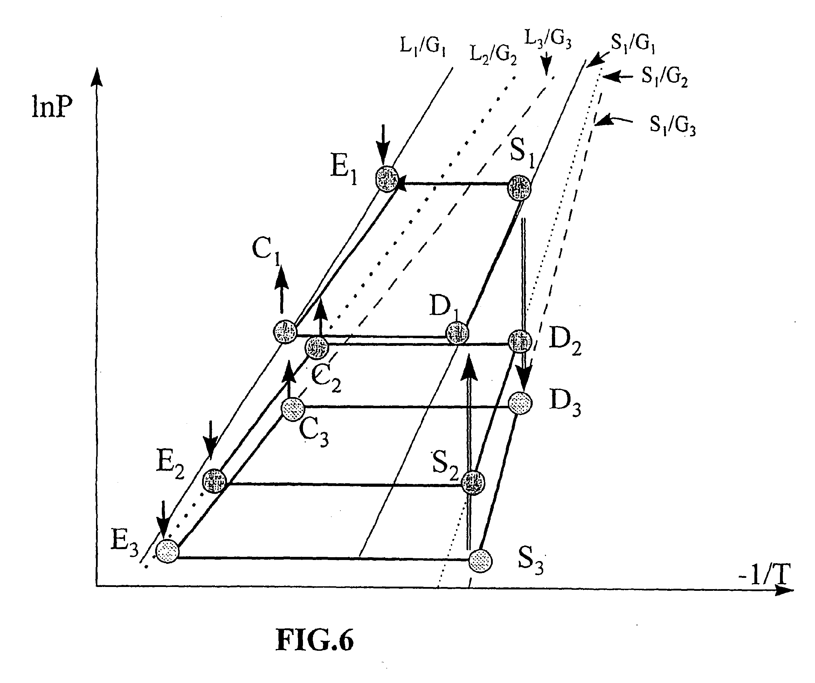

La figure 6 représente.le diagramme de Clapeyron correspondant à une installation analogue à celle illustrée par la figure 3 et fonctionnant de la même manière. La seule différence réside dans le fait qu'on utilise un gaz de travail différent dans chaque ensemble. Le froid est produit au cours d'une première étape dans les réacteurs $R'_2$ et $R'_3$ aux températures $T_{2B}$ et $T_{3B}$ et l'installation est régénérée au cours d'une première étape dans les réacteurs $R'_2$ et $R'_3$ aux températures $T_{2B}$ et $T_{3B}$ et l'installation est régénérée au cours d'une deuxième étape en apportant de l'énergie calorifique à $R'_1$ fonctionnant en tant qu'évaporateur à la température élevée $T_{1H}$.

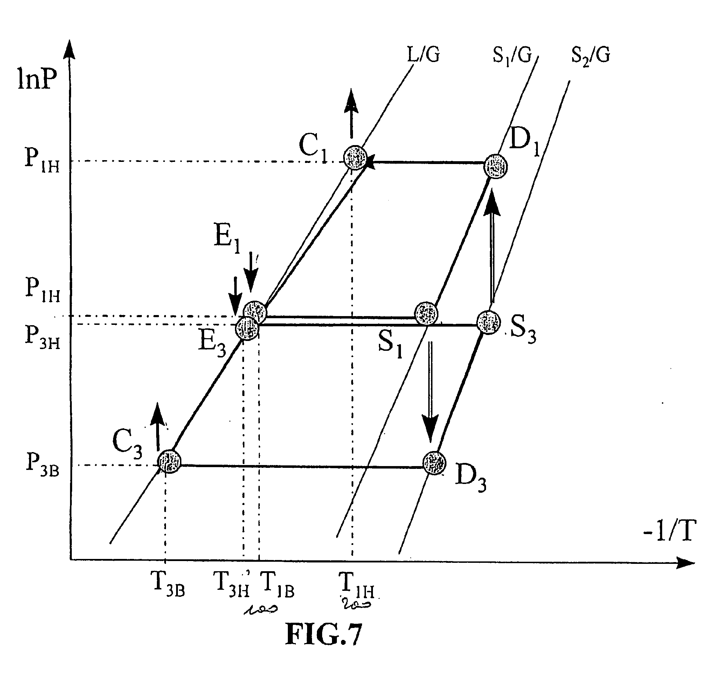

La figure 7 représente le diagramme de Clapeyron correspond à une installation utilisable selon l'invention qui est analogue à utilisée dans le mode de réalisation de la figure 1 et qui comprend deux réacteurs $R_1$ et $R_3$ et deux réacteurs associés $R'_1$ et $R'_3$, mais fonctionnant pour produire une quantité de chaleur à une température supérieure à celle de la source. A l'état initial, les réacteurs $R'_1$ et $R'_3$ contiennent le gaz G sous forme liquide, le réacteur $R_1$ contient (B1,G) et le réacteur $R_3$ contient B3 ;

- Au cours d'une première étape de fonctionnement, on produit de la chaleur à la température $T_{1H}$ de la manière suivante : on apporte de l'énergie calorifique à $R'_3$ pour le porter à la température $T_{3H}$, puis on met en communication $R_1$ avec $R'_1$, et $R_3$ avec $R'_3$, ce qui provoque l'évaporation spontanée de G dans $R'_3$. avec production de froid, transfert de G dans R3 pour la sorption S3, transfert de la chaleur libérée par la sorption vers $R_1$ et la désorption dans $R_1$, transfert du gaz libéré vers $R'_1$ et condensation avec libération de chaleur à la température $T_{1H}$ ;

- Au cours d'une deuxième étape, on régénère l'installation, en apportant de la chaleur à $R'_1$ pour le porter à la température $T_{1B}$, puis en mettant les réacteurs d'un même ensemble en communication, ce qui provoque l'évaporation de G dans $R'_1$, le transfert de G vers $R_1$, la sorption exothermique dans $R_1$, le transfert de la chaleur dégagée vers $R_3$, la désorption dans $R_3$, le transfert et la condensation du gaz vers $R'_3$ avec dégagement de chaleur à une température inférieure à la température normale ; l'installation est alors prête pour une nouvelle étape de production de chaleur à un niveau de température supérieur à celui de la source.

Dans ce mode de mise en oeuvre, on peut produire de la chaleur en un lieu donné à partir d'une source de chaleur située en un autre lieu, la chaleur produite étant à un niveau de température supérieur à celui de la source, en transportant simplement un gaz dans une conduite reliant d'une part le réacteur $R_1$ et le réacteur $R'_1$ (évaporateur / condenseur dans le cas présent) et d'autre part le réacteur $R_3$ et l'évaporateur/condenseur $R'_3$ qui lui est associé. Le gaz de travail G et les sorbants B1 et $B_3$ utilisés sont choisis en fonction de la température à laquelle on souhaite produire de la chaleur, et de la température de la source d'énergie calorifique disponible.

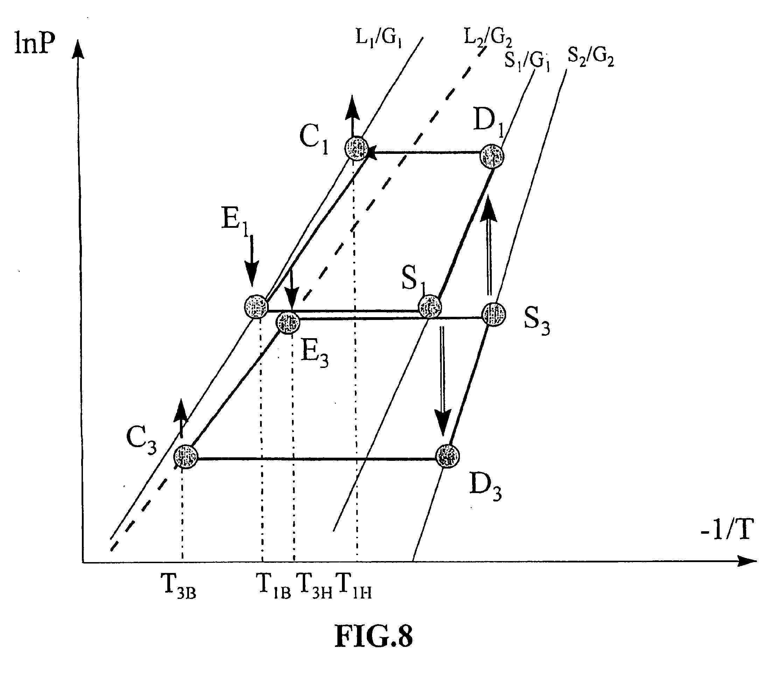

Un autre mode de mise en oeuvre de l'invention pour la production de chaleur est illustré par la figure 8. L'installation est analogue à celle qui est utilisée pour le cas illustré par la figure 7, de même que la séquence des étapes successives. La différence réside dans le fait que les gaz $G_1$ et $G_3$ sont différents. A l'état initial, les réacteurs $R'_1$ et $R'_3$ contiennent les gaz respectifs $G_1$ et $G_3$ sous forme liquide, le réacteur $R_1$ contient (B1, $G_1$) et le réacteur $R_3$ contient $B_3$. Il en résulte que, au cours de la première étape de fonctionnement, la quantité de chaleur utile est produite dans $R'_1$ à la température $T_{1H}$ qui est celle de la condensation de $G_1$ et au cours de la deuxième étape de régénération, la quantité de chaleur dégradée récupérée dans $R'_3$ est à la température $T_{3B}$ qui est celle de la condensation de $G_3$.

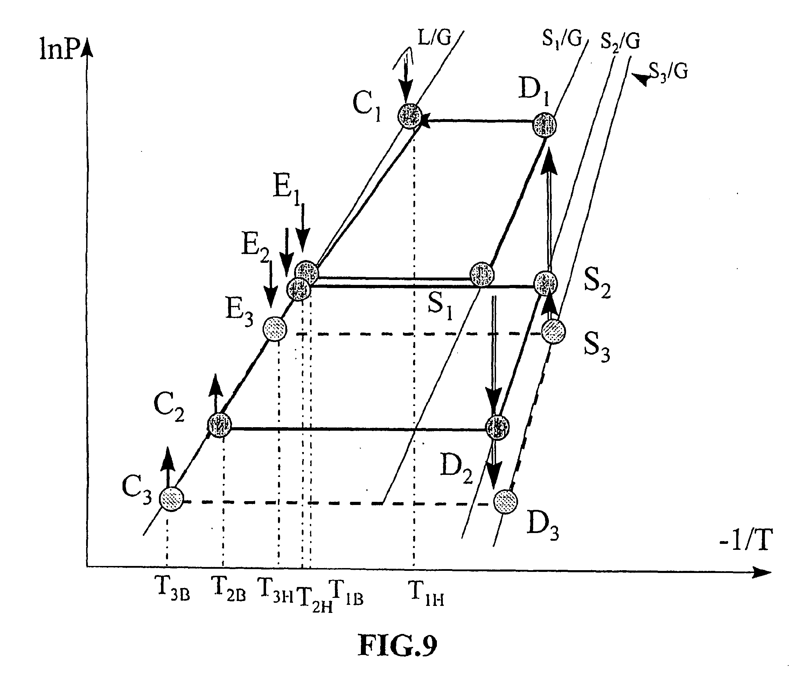

La figure 9 représente le diagramme de Clapeyron correspondant à la production de chaleur dans une installation analogue à celle utilisée pour la production de froid dans l'exemple représenté sur la figure 3.

Au début du processus, les réacteurs $R_2$ et $R_3$ contiennent respectivement B2 et B3, le réacteur $R_1$ contient (B1,G), et les réacteurs $R'_i$ correspondants contiennent le gaz G sous sa forme liquide.

- Dans une première étape, on introduit respectivement dans $R'_2$ et $R'_3$ les quantités de chaleur nécessaires pour les porter aux températures respectives $T_{2H}$ et $T_{3H}$ supérieures à la température normale, puis l'on met en communication les réacteurs de chaque ensemble. Le gaz G s'évapore spontanément dans $R'_2$ et $R'_3$, provoquant les sorptions S2 et S3. La chaleur dégagée lors de chaque sorption est transmise au réacteur $R_1$ pour la désorption D1 qui libère du gaz G qui se condense dans $R'_1$ en produisant de la chaleur utile à la température $T_{1H}$ ;
- dans une deuxième étape, de la chaleur est introduite dans $R'_1$ pour le porter à la température $T_{1B}$, puis on met en communication les réacteurs de chaque ensemble. Le gaz G évaporé spontanément dans $R'_1$ provoque la sorption S1 ; la chaleur dégagée par S1 est transmise à $R_2$ et $R_3$ ce qui provoque les désorptions D2 et D3, de sorte que l'installation se trouve à nouveau en état pour produire de la chaleur. Si les rédacteurs $R'_2$ et $R_2$ d'une part, et $R'_3$ et $R_3$ d'autre part ne sont pas en connexion, la chaleur est stockée. Le stockage étant fait sous forme chimique, il n'y a pas de pertes thermiques.

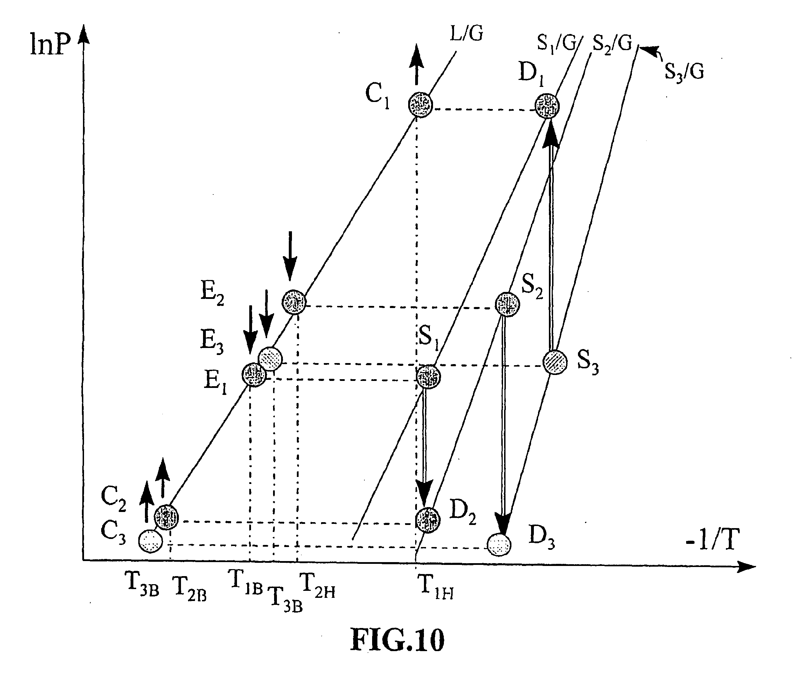

La figure 10 représente le diagramme de Clapeyron correspondant à une installation utilisable selon l'invention qui comprend trois ensembles HP, BP et PI. Le gaz de travail G est identique dans les trois réacteurs $R_i$, et les sorbants Bi sont tous différents. La production de chaleur utile se fait dans $R'_1$ fonctionnant comme condenseur à son niveau de pression le plus élevé, correspondant ainsi à la température la plus élevée de l'installation. La régénération de l'installation se fait en deux temps par introduction de chaleur à un niveau de température intermédiaire.

Au démarrage du processus, le réacteur $R_3$ contient B3 et les deux autres réacteurs contiennent respectivement (B1,G) et (B2,G), à température normale.

- Au cours d'une première étape, on introduit de la chaleur dans $R'_3$ pour le porter à la température $T_{3H}$ supérieure à la température normale, puis on met en communication d'une part $R_3$ et $R'_3$, et d'autre part $R_1$ et $R'_1$ ; l'évaporation spontanée de G dans $R'_3$ provoque la sorption S3 dans $R_3$ avec production de chaleur transmise à (B1,G) contenu dans $R_1$, puis la désorption D1 et la libération de gaz G qui se condense en $R'_1$ avec libération de chaleur à la température $T_{1H}$ supérieure à $T_{3H}$ ;
- au cours d'une deuxième étape, on introduit de la chaleur dans $R'_1$ pour le porter à une température $T_{1B}$ supérieure à la température normale, puis on met en communication d'une part $R_2$ et $R'_2$, et d'autre part $R_1$ et $R'_1$ ; la libération spontanée de G dans $R'_1$ provoque la sorption S1 qui fournit à $R_2$ la chaleur nécessaire à la désorption D2, et la condensation de G dans $R'_2$ ;
- au cours d'une troisième étape, on fournit de la chaleur à $R'_2$, puis on met en communication d'une part $R_2$ et $R'_2$, et d'autre part $R'_3$ et $R_3$ pour libérer le gaz G en direction de $R_2$ pour la sorption S2. La chaleur libérée est transférée

dans $R_3$ pour la désorption D3. L'installation est alors prête pour une nouvelle séquence de production de chaleur.

Dans ce mode de mise en oeuvre, l'installation utilisable selon l'invention produit de la chaleur revalorisée à niveau élevé au cours de la première étape, la régénération se faisant au cours des 2ème et 3ème étapes.

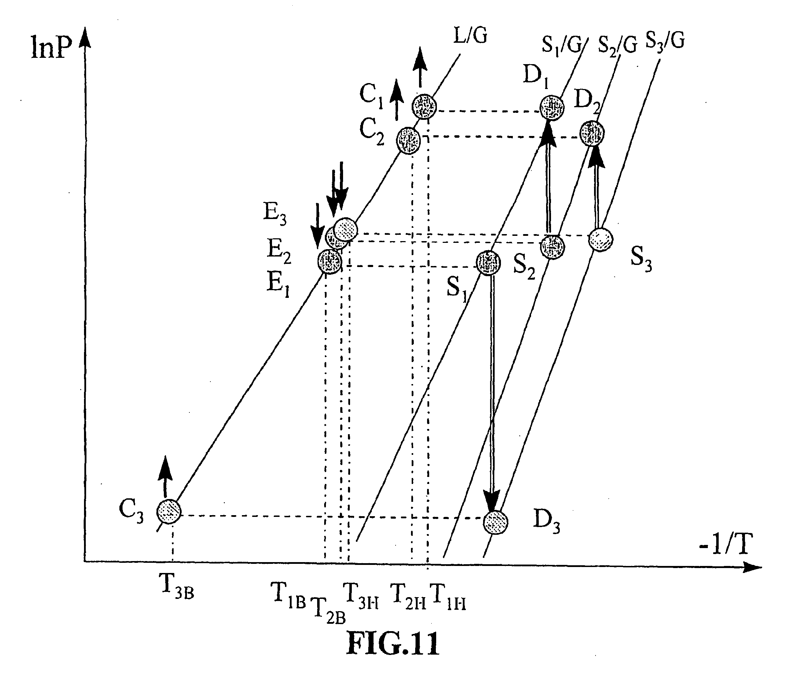

La figure 11 représente le diagramme de Clapeyron correspondant à une installation utilisable selon l'invention qui comprend trois ensembles HP, BP et PI. Le gaz de travail G est identique dans les trois réacteurs $R_i$, et les sorbants Bi sont tous différents.

Au démarrage du processus, le réacteur $R_3$ contient B3 et les deux autres réacteurs contiennent respectivement (B1,G) et (B2,G).

- Au cours d'une première étape, on introduit dans $R'_3$ la chaleur nécessaire pour le porter à la température $T_{3H}$, puis on met en communication d'une part $R_3$ et $R'_3$, et d'autre $R_2$ et $R'_2$ ; l'évaporation de G dans $R'_3$ provoque la sorption S3 dans $R_3$ avec production de chaleur transmise à (B2,G) contenu dans $R_2$, puis la désorption D2 et la libération de gaz G qui se condense en $R'_2$ avec libération de chaleur à la température $T_{2H}$ ;
- au cours d'une deuxième étape, on porte $R'_2$ à la température $T_{2H}$, puis on met en communication d'une part $R_2$ et $R'_2$, et d'autre part $R_1$ et $R'_1$, ce qui provoque la sorption S2 qui fournit à $R_1$ la chaleur nécessaire à la désorption D1 ; le gaz libéré se condense dans $R_1$ en libérant de la chaleur à la température $T_{1H}$ ;
- au cours d'une troisième étape, on fournit de la chaleur à $R'_1$ pour le porter à la température $T_{1B}$, puis l'on met en communication d'une part $R_1$ et $R'_1$, et d'autre part $R'_3$ et $R_3$ pour libérer le gaz G en direction de $R_1$ pour la sorption S1. La chaleur libérée est transférée dans $R_3$ pour la désorption D3. L'installation est alors prête pour une nouvelle séquence de production de chaleur.

Dans ce mode de mise en oeuvre de l'installation à trois ensembles, la chaleur est produite à un niveau de température élevée au cours des deux premières étapes du cycle de fonctionnement, et l'installation est régénérée au cours de la troisième étape.

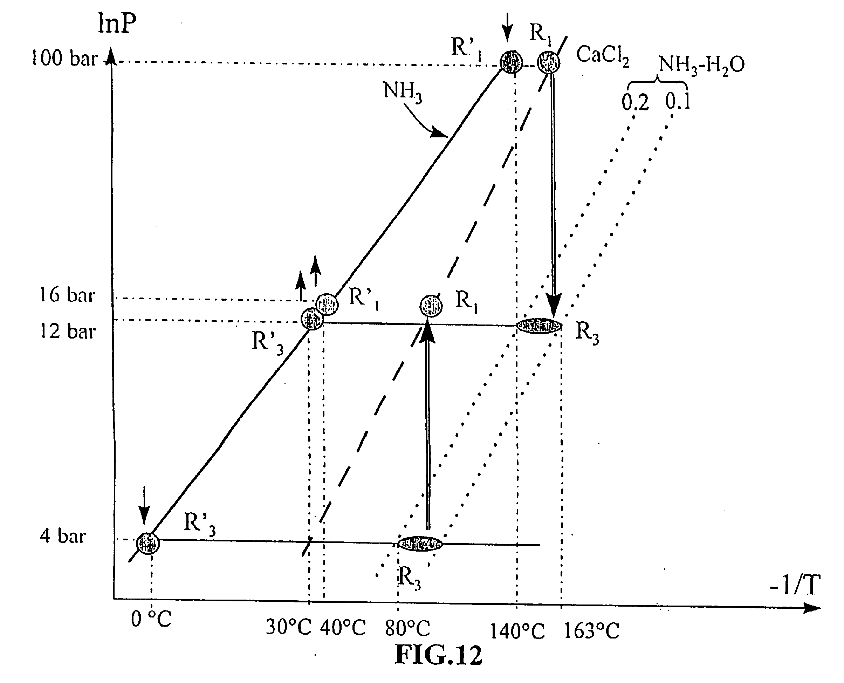

La figure 12 représente le diagramme de Clapeyron théorique d'une installation particulière comprenant deux ensembles fonctionnant pour la production de froid. Dans les deux ensembles, le gaz de travail est l'ammoniac et les réacteurs $R'_1$ et $R'_3$ fonctionnent par conséquent alternativement en condenseur et en évaporateur de $NH_3$. Dans l'ensemble HP, le réacteur $R_1$ est le siège d'une réaction de $NH_3$ sur $CaCl_2$. Dans l'ensemble BP, le réacteur est le siège d'une absorption renversable de $NH_3$ par l'eau selon le schéma

$$NH_3 + H_2O, x_1NH_3 \leftrightarrows H_2O, x_2NH_3$$

avec $x_1 = 0,1$ et $x_2 = 0,2$. Ce phénomène étant bivariant, la droite d'équilibre se déplace en fonction de la quantité de $NH_3$ absorbé. Lors de la mise en service d'une telle installation, $CaCl_2$ est sous forme riche en gaz et l'eau est pauvre en gaz. La mise en relation des réacteurs $R'_3$ et $R_3$ les place à une pression de l'ordre de 4 bar provoque l'évaporation de $NH_3$ à 0°C et l'absorption de $NH_3$ par l'eau à une température initiale de 90°C. A mesure que l'eau s'enrichit en ammoniac, la température diminue dans $R_3$ jusqu'à la valeur 80°C lorsque la teneur x en ammoniac dans l'eau atteint 0,2. Dans le même temps, la chaleur libérée par l'absorption d'ammoniac dans l'eau est transmise au réacteur $R_1$ pour décomposer le chlorure de calcium riche en ammoniac. L'ammoniac libéré se condense dans $R'_1$ à 40°C en libérant de la chaleur. Pour régénérer l'installation, on introduit de la chaleur dans $R'_1$ pour évaporer l'ammoniac qui s'adsorbe sur $CaCl_2$ à une température de 163°C. La chaleur libérée est transmise au réacteur $R_3$ pour libérer une partie de l'ammoniac absorbé dans l'eau, cette libération commençant lorsque la température dans $R_3$ est de 140°C, correspondant à la température d'équilibre pour une concentration d'ammoniac dans l'eau de 0,2. Si la chaleur produite à 40°C est utile, l'installation fonctionne pour la production simultanée de froid et de chaleur.

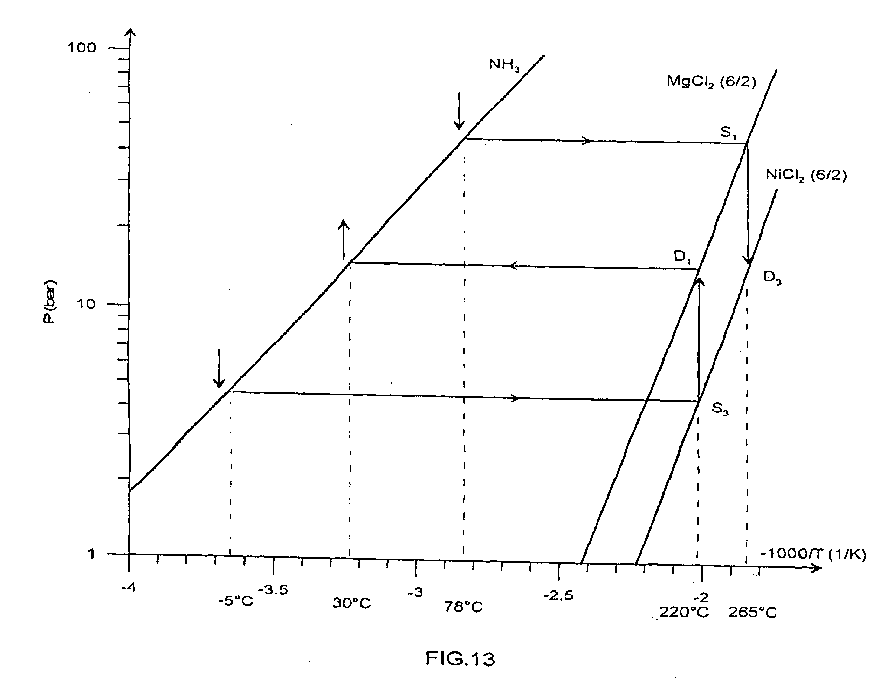

La figure 13 représente le diagramme de Clapeyron expérimental d'une installation à deux ensembles fonctionnant pour la production de froid. Dans les deux ensembles, le gaz de travail est l'ammoniac et les réacteurs $R'_1$ et $R'_3$ fonctionnent par conséquent alternativement en condenseur et en évaporateur de $NH_3$. Dans l'ensemble HP, le réacteur $R_1$ est le siège d'une réaction de $NH_3$ sur $MgCl_2$ suivant le schéma $MgCl_2, 2NH_3 + NH_3 \leftrightarrows MgCl_2, 6NH_3$. Dans l'ensemble BP, le réacteur est le siège d'une réaction de $NH_3$ sur $NiCl_2$ suivant le schéma $NiCl_2, 2NH_3 + NH_3 \leftrightarrows NiCl_2, 6NH_3$. Lors de l'étape de production de froid, l'ammoniac est évaporé dans $R'_3$ en produisant du froid à -5°C, la réaction exothermique dans le chlorure de nickel se produit à 220°C et la chaleur est transférée dans $R_1$ pour la désorption du chlorure de magnésium riche en ammoniac, à 220°C, l'ammoniac libéré se condensant dans $R'_1$ à 30°C en libérant de la chaleur. Lors de l'étape de régénération, de la chaleur est introduite dans $R'_1$ à 78°C pour évaporer $NH_3$ qui va se fixer sur le chlorure de Mg en libérant de la chaleur qui est transférée dans $R_3$ à 265°C pour décomposer le chlorure de nickel riche en ammoniac et l'installation est à nouveau prête pour produire du froid. Le réacteur $R'_3$ est installé sur le lieu d'utilisation du froid, le réacteur $R'_1$ est installé sur le lieu où l'énergie calorifique est disponible. Le transport d'énergie frigorifique se fait ainsi par voie chimique évitant toute perte thermique.

## Revendications

1. Procédé pour la production de froid et/ou de chaleur en un lieu donné à partir d'une ou plusieurs sources d'énergie thermique comprenant une succession de phénomènes renversables entre un gaz et un liquide ou un solide, ledit procédé étant mis en oeuvre dans une installation qui comprend un ensemble HP comprenant des réacteurs $R_1$ et $R'_1$, un ensemble BP comprenant des réacteurs $R_3$ et $R'_3$ et éventuellement un ensemble PI comprenant des réacteurs $R_2$ et $R'_2$, dans laquelle chaque réacteur $R_i$ est le siège d'une sorption renversable produisant et consommant alternativement le gaz $G_i$ ; chaque réacteur $R'_i$ est le siège d'un phénomène renversable produisant et consommant alternativement le gaz $G_i$ ; les sorbants et gaz respectifs dans les réacteurs sont choisis de telle manière que, à une pression donnée : la température d'équilibre de la sorption dans le réacteur $R_i$ d'un ensemble soit supérieure à la température d'équilibre du phénomène renversable dans le réacteur $R'_i$ du même ensemble, la température d'équilibre de la sorption dans le réacteur $R_1$ soit inférieure à celle dans $R_3$, et le cas échéant la température d'équilibre de la sorption dans $R_2$ soit entre les températures d'équilibre dans $R_1$ et $R_3$ ; les réacteurs $R_i$ et $R'_i$ d'un ensemble sont munis de moyens pour échanger le gaz $G_i$ ; les réacteurs $R_i$ sont munis de moyens pour échanger de la chaleur entre eux ; et les réacteurs sont isolés de la pression atmosphérique ; ledit procédé comprenant :

   - les sources d'énergie thermique nécessaires au fonctionnement de l'installation et alimentant les réacteurs $R'_1$, $R'_3$ et le cas échéant $R'_2$ ;
   - il comprend :

      • une étape préliminaire dans laquelle les moyens d'échange de gaz entre deux réacteurs d'un ensemble sont fermés et on place les sorbants et gaz respectifs à température normale dans les réacteurs de telle sorte que le réacteur $R_1$ de l'ensemble HP contient le sorbant sous forme riche en gaz (B1,$G_1$), le réacteur $R'_1$ est en état de consommer le gaz $G_1$, le réacteur $R_3$ de l'ensemble BP contient le sorbant sous forme pauvre en gaz B3 et le réacteur $R'_3$ correspondant est en état de fournir du gaz $G_3$ ;
      • une étape a) de production de froid et ou de chaleur, au cours de laquelle on ouvre les moyens d'échange de gaz entre les réacteurs $R_3$ et $R'_3$ d'une part, les réacteurs $R_1$ et $R'_1$, et le cas échéant entre les réacteurs $R_2$ et $R'_2$, éventuellement après avoir porté le réacteur $R'_3$, et le cas échéant à $R'_2$ une température supérieure à la température normale par apport d'énergie calorifique ;
      • une étape b) de régénération au cours de laquelle on ouvre les moyens d'échange de gaz entre les réacteurs R3 et R'3 d'une part, les réacteurs R1 et R'1, et le cas échéant entre les réacteurs R2 et R'2, après avoir porté le réacteur R'1 et le cas échéant R'2 à une température supérieure à la température normale par apport d'énergie calorifique.

2. Procédé selon la revendication 1, pour la production de froid en un lieu donné à partir de sources d'énergie thermique situées en un autre lieu, selon lequel :

      • le gaz et les sorbants respectifs dans l'ensemble BP ou les ensembles BP et PI sont choisis de telle sorte que, à la pression respective qui s'installe dans $R'_3$ ou dans $R'_3$ et $R'_2$ après ouverture des moyens d'échange du gaz dans les réacteurs, la température d'équilibre du phénomène renversable dans $R'_3$ ou dans $R'_3$ et dans $R'_2$ corresponde à la température à laquelle la production de froid est souhaitée ;
      • lors de l'étape a) de production, on ouvre les moyens d'échange de gaz entre les réacteurs sans apport préalable d'énergie calorifique au réacteur $R'_3$ ou aux réacteurs $R'_3$ et $R'_2$.

3. Procédé pour la production de froid selon la revendication 2, ledit procédé étant mis en oeuvre dans une installation comprenant les ensembles HP et BP, dans les conditions suivantes :

   - au cours d'une étape préliminaire,

      • les moyens de transfert de gaz entre $R_1$ et $R'_1$ d'une part, entre $R_3$ et $R'_3$ d'autre part sont fermés,
      • on introduit dans les réacteurs les sorbants et gaz respectifs de telle sorte que le réacteur $R_1$ de l'ensemble HP contienne le sorbant sous forme riche en gaz (B1,$G_1$), le réacteur $R'_1$ soit en état de consommer le gaz $G_1$, le réacteur $R_3$ de l'ensemble BP contienne le sorbant sous forme pauvre en gaz B3 et le réacteur $R'_3$ correspondant soit en état de fournir du gaz $G_3$,
      • le gaz et les sorbants respectifs dans l'ensemble BP sont choisis de telle sorte que, à la pression respective qui s'installe dans $R'_3$ après ouverture des moyens d'échange du gaz, la température d'équilibre du phénomène renversable dans $R'_3$ corresponde à la température à laquelle la production de froid est souhaitée ;

- au cours de l'étape a), on ouvre les moyens de transfert de gaz entre les réacteurs R3 et R'3 d'une part et entre les réacteurs R1 et R'1 d'autre part, ce qui provoque la production de froid dans $R'_3$ ;
- au cours de l'étape b), on fournit de l'énergie calorifique à $R'_1$ pour le porter à une température supérieure à la température normale, puis on ouvre les moyens de transfert de gaz entre les réacteurs $R_3$ et $R'_3$ d'une part et entre les réacteurs $R_1$ et $R'_1$ d'autre part, ce qui régénère l'installation.

4. Procédé pour la production de froid selon la revendication 2, ledit procédé étant mis en oeuvre dans une installation qui comprend trois ensembles HP, BP et PI comprenant respectivement les réacteurs $R_1,R'_1$, $R_3,R'_3$, et $R_2,R'_2$, dans les conditions suivantes :

   - au cours d'une étape préliminaire,

     • on ferme les moyens d'échange de gaz entre les réacteurs $R_1,R'_1$, $R_3,R'_3$, et $R_2,R'_2$,
     • on introduit dans les réacteurs les sorbants et gaz respectifs de telle sorte que le réacteur $R_1$ de l'ensemble HP contienne le sorbant sous forme riche en gaz $(B1,G_1)$, le réacteur $R'_1$ soit en état de consommer le gaz $G_1$, les réacteurs $R_3$ et $R_2$ des ensembles BP et PI contiennent leur sorbant sous forme pauvre en gaz, respectivement B3 et B2, et les réacteurs $R'_3$ et $R'_2$ soient en état de fournir les gaz respectifs $G_3$ et $G_2$,
     • le gaz et les sorbants respectifs dans les ensembles BP et PI sont choisis de telle sorte que, aux pressions respectives qui s'installent dans $R'_3$ et $R'_2$ après ouverture des moyens d'échange du gaz, les températures d'équilibre des phénomènes renversables respectifs dans $R'_2$ et $R'_3$ correspondent aux températures auxquelles la production de froid est souhaitée ;

     - au cours de l'étape a) on ouvre les moyens d'échange de gaz entre les réacteurs $R_1,R'_1$, $R_3,R'_3$ et $R_2,R'_2$, ce qui produit du froid dans $R'_3$ et dans $R'_2$ ;
     - au cours de l'étape b), on apporte de l'énergie calorique à $R'_1$, puis on ouvre les moyens d'échange de gaz entre les réacteurs $R_1,R'_1$, $R_3,R'_3$ et $R_2,R'_2$, ce qui provoque la régénération de l'installation.

5. Procédé de production de froid selon la revendication 2, ledit procédé étant mis en oeuvre dans une installation qui comprend trois ensembles HP, BP et PI comprenant respectivement les réacteurs $R_1,R'_1$, $R_3,R'_3$, et $R_2,R'_2$, dans les conditions suivantes :

   - au cours d'une étape préliminaire,

     • on ferme les moyens d'échange de gaz entre les réacteurs $R_1,R'_1$, $R_3,R'_3$, et $R_2,R'_2$,
     • on introduit dans les réacteurs les sorbants et gaz respectifs choisis de telle sorte que les réacteurs $R_1$ et $R_2$ contiennent leur sorbant respectif sous forme riche en gaz $(B1,G_1)$ et $(B2,G_2)$, les réacteurs $R'_1$ et $R'_2$ soient en état de consommer le gaz respectif $G_1$ et $G_2$, le réacteur $R_3$ contienne le sorbant sous forme pauvre en gaz B3, et le réacteur $R'_3$ soit en état de fournir le gaz ;

     - au cours de l'étape a) dans une première phase, on ouvre les moyens d'échange de gaz entre les réacteurs $R_3,R'_3$ d'une part et entre les réacteurs $R_2,R'_2$ d'autre part, ce qui produit du froid dans $R'_3$ ; dans une deuxième phase, on ouvre les moyens d'échange de gaz entre les réacteurs $R_1,R'_1$ d'une part et les réacteurs $R_2,R'_2$ d'autre part, ce qui produit du froid dans $R'_2$;
     - au cours de l'étape b), on fournit de l'énergie calorifique à $R'_1$ pour le porter à une température supérieure à la température normale, puis on ouvre les moyens de transfert de gaz entre les réacteurs $R_1,R'_1$ d'une part et les réacteurs $R_3,R'_3$ d'autre part, ce qui régénère l'installation.

6. Procédé pour la production de froid selon la revendication 2, ledit procédé étant mis en oeuvre dans une installation qui comprend trois ensembles HP, BP et PI comprenant respectivement les réacteurs $R_1,R'_1$, $R_3,R'_3$, et $R_2,R'_2$, dans les conditions suivantes :

   - au cours d'une étape préliminaire,

     • on ferme les moyens d'échange de gaz entre les réacteurs $R_1,R'_1$, $R_3,R'_3$, et $R_2,R'_2$,
     • on introduit dans les réacteurs $R_i$ et les réacteurs $R'_i$ les sorbants et gaz respectifs choisis de telle sorte que les réacteurs $R_1$ et $R_2$ contiennent leur sorbant respectif sous forme riche en gaz $(B1,G_1)$ et $(B2,G_2)$, les réacteurs $R'_1$ et $R'_2$ soient en état de consommer le gaz respectif $G_1$ et $G_2$, le réacteur $R_3$ contienne le sorbant sous forme pauvre en gaz B3, et le réacteur $R'_3$ soit en état de fournir le gaz ;

- au cours de l'étape a) on ouvre les moyens de transfert de gaz entre les réacteurs $R_3,R'_3$ d'une part et les réacteurs $R_1,R'_1$ d'autre part, ce qui produit du froid dans $R'_3$;
- au cours de l'étape b), dans une première phase, on apporte de l'énergie calorifique à $R'_1$ et on met en communication les réacteurs $R_1,R'_1$ d'une part et les réacteurs $R_2,R'_2$ d'autre part ; dans une deuxième phase, on apporte de l'énergie calorifique à $R'_2$, puis on met en connexion les réacteurs $R_2,R'_2$ d'une part et les réacteurs $R_3,R'_3$ d'autre part, ce qui provoque la régénération de l'installation.

**7.** Procédé selon la revendication 1 pour la production de chaleur à une température supérieure à celle d'une source d'énergie calorifique, selon lequel, lors de l'étape a) de production, on apporte de l'énergie calorifique à l'installation par le réacteur $R'_3$, et éventuellement par le réacteur $R'_2$, avant d'ouvrir les moyens d'échange de gaz entre les réacteurs $R_3$ et $R'_3$, et éventuellement entre les réacteurs $R_2$ et $R'_2$.

**8.** Procédé selon la revendication 7 pour la production de chaleur en un lieu donné à partir de sources d'énergie calorifiques situées en un autre lieu, selon lequel on utilise comme source de chaleur pour l'étape b) de régénération, l'exergie de la chaleur produite à température élevée lors de l'étape a).

**9.** Procédé pour la production de chaleur selon l'une des revendications 7 ou 8, ledit procédé étant mis en oeuvre dans une installation qui comprend un ensemble HP comprenant les réacteurs $R_1$ et $R'_1$ et un ensemble BP comprenant les réacteurs $R_3$ et $R'_3$, dans les conditions suivantes:

   - au cours d'une étape préliminaire,

      • les moyens de transfert de gaz entre $R_1$ et $R'_1$ d'une part, entre $R_3$ et $R'_3$ d'autre part sont fermés,
      • on introduit dans les réacteurs les sorbants et gaz respectifs de telle sorte que le réacteur $R_1$ de l'ensemble HP contienne le sorbant sous forme riche en gaz $(B1,G_1)$, le réacteur $R'_1$ soit en état de consommer le gaz $G_1$, le réacteur $R_3$ de l'ensemble BP contienne le sorbant sous forme pauvre en gaz B3 et le réacteur $R'_3$ correspondant soit en état de fournir du gaz $G_3$,

         - au cours de l'étape a), on fournit de l'énergie calorifique à $R'_3$ pour le porter à une température supérieure à la température normale, puis on ouvre les moyens de transfert de gaz entre les réacteurs $R_3$ et $R'_3$ d'une part et les réacteurs $R_1$ et $R'_1$ d'autre part, ce qui provoque la production de chaleur dans $R'_1$ ;
         - au cours de l'étape b), on fournit de l'énergie calorifique à $R'_1$ pour le porter à une température supérieure à la température normale, puis on ouvre les moyens de transfert de gaz entre les réacteurs $R_3$ et $R'_3$ d'une part, et les réacteurs $R_1$ et $R'_1$, ce qui provoque la régénération de l'installation.

**10.** Procédé de production de chaleur selon l'une des revendications 7 ou 8, ledit procédé étant mis en oeuvre dans une installation qui comprend trois ensembles HP, BP et PI comprenant respectivement les réacteurs $R_1,R'_1$, $R_3$, $R'_3$, et $R_2,R'_2$, dans les conditions suivantes :

   - au cours d'une étape préliminaire,

      • on ferme les moyens d'échange de gaz entre les réacteurs $R_1,R'_1$, $R_3,R'_3$, et $R_2,R'_2$,
      • on introduit dans les réacteurs les sorbants et gaz respectifs choisis de telle sorte que le réacteur $R_1$ contienne le sorbant sous forme riche en gaz $(B1,G_1)$, le réacteur $R'_1$ soit en état de consommer le gaz $G_1$, les réacteurs $R_3$ et $R_2$ contiennent leur sorbant respectif sous forme pauvre en gaz B3 et B2, et les réacteurs $R'_3$ et $R'_2$ soient en état de fournir le gaz respectif $G_3$ et $G_2$ ;

      - au cours de l'étape a), on fournit de l'énergie calorifique à $R'_3$ et $R'_2$ pour les porter à une température supérieure à la température normale, puis on ouvre les moyens d'échange de gaz entre les réacteurs $R_3,R'_3$, les réacteurs $R_2,R'_2$ et les réacteurs $R_1,R'_1$, ce qui provoque la production de chaleur dans $R'_1$ ;
      - au cours de l'étape b), on fournit de l'énergie calorifique à $R'_1$ pour le porter à une température supérieure à la température normale, puis on ouvre les moyens de transfert de gaz entre les réacteurs $R_3,R'_3$, les réacteurs $R_2,R'_2$ et les réacteurs $R_1,R'_1$, ce qui provoque la régénération du système.

**11.** Procédé pour la production de chaleur selon l'une des revendications 7 ou 8, ledit procédé étant est mis en oeuvre dans une installation qui comprend trois ensembles HP, BP et PI comprenant respectivement les réacteurs $R_1,R'_1$, $R_3,R'_3$, et $R_2,R'_2$, dans les conditions suivantes :

- au cours d'une étape préliminaire :

    • on ferme les moyens de transfert de gaz entre les différents réacteurs
    • on introduit dans les réacteurs les sorbants et gaz respectifs, à température normale, de telle sorte que $R_1$ et $R_2$ contiennent leur sorbant respectif à l'état riche en gaz $(S1,G_1)$ et $(S2,G_2)$, $R_3$ contient le sorbant à l'état pauvre en gaz, $R'_1$ et $R'_2$ soient en état de consommer respectivement le gaz $G_1$ et le gaz $G_2$, et $R'_3$ soit en état de libérer le gaz $G_3$ ;

- au cours de l'étape a), on introduit de l'énergie calorifique dans $R'_3$, puis on ouvre les moyens de transfert de gaz entre les réacteurs $R_3,R'_3$ d'une part et les réacteurs $R_1,R'_1$ d'autre part, ce qui provoque la production de chaleur dans $R'_1$ ;
- au cours de l'étape b), dans une première phase, on introduit de l'énergie calorifique dans $R'_1$, puis on ouvre les moyens de transfert de gaz entre les réacteurs $R_1,R'_1$ d'une part et les réacteurs $R_2,R'_2$ d'autre part ; dans une deuxième phase, on fournit de l'énergie calorifique à $R'_2$, puis on ouvre les moyens de transfert de gaz entre les réacteurs $R_2,R'_2$ d'une part et les réacteurs $R_3,R'_3$ d'autre part, ce qui provoque la régénération du système.

**12.** Procédé pour la production de chaleur selon l'une des revendications 7 ou 8, ledit procédé étant est mis en oeuvre dans une installation qui comprend trois ensembles HP, BP et PI comprenant respectivement les réacteurs $R_1,R'_1$, $R_3,R'_3$, et $R_2,R'_2$, dans les conditions suivantes :

- au cours d'une étape préliminaire

    • on ferme les moyens de transfert de gaz entre les différents réacteurs
    • on introduit dans les réacteurs les sorbants et gaz respectifs, à température normale, de telle sorte que $R_2$ contient le sorbant à l'état riche en gaz $(S2,G_2)$, $R_3$ et $R_1$ contient leur sorbant à l'état pauvre en gaz respectivement B3 et B1, $R'_2$ est en état de consommer le gaz $G_2$, et $R'_3$ et $R'_1$ sont en état de libérer le gaz respectivement $G_3$ et $G_2$ ;

- au cours de l'étape a) dans une première phase, on introduit de l'énergie calorifique dans $R'_3$, puis on met en connexion les réacteurs $R_3,R'_3$ d'une part et les réacteurs $R_2,R'_2$ d'autre part, ce qui provoque la production de chaleur dans $R'_2$ ; dans une deuxième phase, on introduit de l'énergie calorifique dans $R'_2$, on met en connexion les réacteurs $R_1,R'_1$ d'une part et les réacteurs $R_2,R'_2$ d'autre part, ce qui provoque la production de chaleur dans $R'_1$ ;
- au cours de l'étape b), on fournit de l'énergie calorifique à $R'_1$, puis on ouvre les moyens de transfert de gaz entre les réacteurs $R_1,R'_1$ d'une part et les réacteurs $R_3,R'_3$ d'autre part, ce qui provoque la régénération de l'installation.

**13.** Procédé selon la revendication 1, le phénomène renversable dans les réacteurs $R'_i$ étant un changement de phase liquide/gaz, une adsorption d'un gaz dans un solide, une absorption d'un gaz dans un liquide, une réaction chimique entre un gaz et un solide ou un liquide, ou la formation de clathrates hydrates.

**14.** Procédé selon la revendication 1, le phénomène renversable dans les réacteurs $R_i$ étant une adsorption d'un gaz dans un solide, une absorption d'un gaz dans un liquide, une réaction chimique entre un gaz et un solide ou un liquide, ou la formation de clathrates hydrates.

**15.** Procédé selon la revendication 1, selon lequel les phénomènes renversables dans tous les ensembles de l'installation mettent en jeu le même gaz.

**Claims**

**1.** A method for producing cold and/or heat at a given place using one or a plurality of thermal energy sources comprising a succession of reversible phenomenons between a gas and a liquid or a solid, said process being put into practice in an installation which comprises an HP assembly comprising reactors $R_1$ and $R'_1$, an LP assembly comprising reactors $R_3$ and $R'_3$, and possibly an IP assembly comprising reactors $R_2$ and $R'_2$, in which installation each reactor $R_i$ is the seat of a reversible sorption alternatively producing and consuming the gas $G_i$; each reactor $R'_i$ is the seat of a reversible phenomenon alternatively producing and consuming the gas $G_i$; the respective sorbents and gases in the reactors are selected so that, at a given pressure: the sorption equilibrium temperature in the reactor $R_i$ of an assembly is higher than the equilibrium temperature of the reversible phenomenon in the reactor $R'_i$ of the same assembly, the sorption equilibrium temperature in the reactor $R_1$ is lower than that in $R_3$, and, if applicable, the sorption equilibrium temperature in $R_2$ is between the equilibrium temperatures in $R_1$ and $R_3$; the reactors $R_i$ and $R'_i$ of an assembly are equipped with means for exchanging the gas $G_i$; the reactors $R_i$ are equipped with means for exchanging heat with each other; and the reactors are isolated from atmospheric pressure; said process comprising:

- the thermal energy sources necessary for the operation of the installation and supplying the reactors $R'_1$, $R'_3$, and if applicable $R'_2$;
- it comprises:

■ a preliminary step in which the gas exchange means between two reactors of an assembly are closed and the respective sorbents and gases are placed at standard temperature in the reactors so that the reactor $R_1$ of the HP assembly contains the sorbent in a form rich in gas $(B1,G_1)$, the reactor $R'_1$ is in a state to consume the gas $G_1$, the reactor $R_3$ of the LP assembly contains the sorbent in a form poor in gas B3 and the corresponding reactor $R'_3$ is in a state to supply gas $G_3$,

■ a step a) of production of cold or heat, during which the gas exchange means are opened between the reactors $R_3$ and $R'_3$ on the one hand, the reactors $R_1$ and $R'_1$, and if applicable between the reactors $R_2$ and $R'_2$, possibly after having raised the reactor $R'_3$, and if applicable $R'_2$, to a temperature higher than the standard temperature by the input of heat energy,

■ a step b) of regeneration during which the gas exchange means are opened between the reactors $R_3$ and $R'_3$ on the one hand, the reactors $R_1$ and $R'_1$, and if applicable between the reactors $R_2$ and $R'_2$, after having raised the reactor $R'_1$ and if applicable $R'_2$ to a temperature higher than the standard temperature by the input of heat energy.

2. The method as claimed in claim 1, for producing cold at a given place using thermal energy sources located at another place, wherein:

■ the respective gases and sorbents in the LP assembly or the LP and IP assemblies are selected so that, at the respective pressure which occurs in $R'_3$ or in $R'_3$ and $R'_2$ after opening of the gas exchange means in the reactors, the equilibrium temperature of the reversible phenomenon in $R'_3$ or in $R'_3$ and in $R'_2$ corresponds to the temperature at which the production of cold is desired,

■ during the step a) of production, the gas exchange means between the reactors are opened without prior input of heat energy to the reactor $R'_3$ or to the reactors $R'_3$ and $R'_2$.

3. The method for producing cold as claimed in claim 2, said method being put into practice in an installation comprising the HP and LP assemblies, under the following conditions:

- during a preliminary step,

■ the gas transfer means between $R_1$ and $R'_1$ on the one hand, between $R_3$ and $R'_3$ on the other, are closed,

■ the respective sorbents and gases are introduced into the reactors so that the reactor $R_1$ of the HP assembly contains the sorbent in a form rich in gas $(B1,G_1)$, the reactor $R'_1$ is in a state to consume the gas $G_1$, the reactor $R_3$ of the LP assembly contains the sorbent in a form poor in gas B3 and the corresponding reactor $R'_3$ is in a state to supply gas $G_3$,

■ the respective gases and sorbents in the LP assembly are selected so that, at the respective pressure which occurs in $R'_3$ after opening the gas exchange means, the equilibrium temperature of the reversible phenomenon in $R'_3$ corresponds to the temperature at which the production of cold is desired,

- during step a), the gas transfer means are opened between the reactors R3 and R'3 on the one hand, and between the reactors R1 and R'1 on the other, which causes the production of cold in $R'_3$,
- during step b), heat energy is supplied to $R'_1$ to raise it to a temperature higher than the standard temperature, the gas transfer means are then opened between the reactors $R_3$ and $R'_3$ on the one hand and between the reactors $R_1$ and $R'_1$ on the other, thereby regenerating the installation.

4. The method for producing cold as claimed in claim 2, said method being put into practice in an installation which comprises three HP, LP and IP assemblies respectively comprising the reactors $R_1,R'_1$, $R_3,R'_3$ and $R_2,R'_2$, under

the following conditions:

- during a preliminary step,

■ the gas exchange means between the reactors $R_1,R'_1$, $R_3,R'_3$ and $R_2,R'_2$ are closed,
■ the respective sorbents and gases are introduced into the reactors so that the reactor $R_1$ of the HP assembly contains the sorbent in a form rich in gas $(B1,G_1)$, the reactor $R'_1$ is in a state to consume the gas $G_1$, the reactors $R_3$ and $R_2$ of the LP and IP assemblies contain their sorbent in a form poor in gas, respectively B3 and B2, and the reactors $R'_3$ and $R'_2$ are in a state to supply the respective gases $G_3$ and $G_2$,
■ the respective gases and sorbents in the LP and IP assemblies are selected so that, at the respective pressures which occur in $R'_3$ and $R'_2$ after opening the gas exchange means, the equilibrium temperatures of the respectively reversible phenomenons in $R'_2$ and $R'_3$ correspond to the temperatures at which the production of cold is desired,

- during step a), the gas exchange means between the reactors $R_1,R'_1$, $R_3,R'_3$ and $R_2,R'_2$ are opened, thereby producing cold in $R'_3$ and in $R'_2$,
- during step b), heat energy is added to $R'_1$, the gas exchange means between the reactors $R_1,R'_1$, $R_3,R'_3$ and $R_2,R'_2$ are opened, thereby causing the regeneration of the installation.

5. The method for producing cold as claimed in claim 2, said method being put into practice in an installation which comprises three HP, LP and IP assemblies respectively comprising the reactors $R_1,R'_1$, $R_3,R'_3$ and $R_2,R'_2$, under the following conditions:

- during a preliminary step,

■ the gas exchange means between the reactors $R_1,R'_1$, $R_3,R'_3$ and $R_2,R'_2$ are closed,
■ the respective sorbents and gases are introduced into the reactors and are selected so that the reactors $R_1$ and $R_2$ contain their respective sorbent in a form rich in gas $(B1,G_1)$ and $(B2,G_2)$, the reactors $R'_1$ and $R'_2$ are in a state to consume the respective gas $G_1$ and $G_2$, the reactor $R_3$ contains the sorbent in a form poor in gas B3, and the reactor $R'_3$ is in a state to supply the gas,

- during step a) in a first phase, the gas exchange means between the reactors $R_3,R'_3$ on the one hand and between the reactors $R_2,R'_2$ on the other are opened, thereby producing cold in $R'_3$; in a second phase, the gas exchange means between the reactors $R_1,R'_1$ on the one hand and the reactors $R_2,R'_2$ on the other are opened, thereby producing cold in $R'_2$,
- during step b), heat energy is supplied to $R'_1$ to raise it to a temperature higher than the standard temperature, the gas transfer means are then opened between the reactors $R_1,R'_1$ on the one hand and the reactors $R_3,R'_3$ on the other, thereby regenerating the installation.

6. The method for producing cold as claimed in claim 2, said method being put into practice in an installation which comprises three HP, LP and IP assemblies respectively comprising the reactors $R_1,R'_1$, $R_3,R'_3$ and $R_2,R'_2$, under the following conditions:

- during a preliminary step,

■ the gas exchange means between the reactors $R_1,R'_1$, $R_3,R'_3$ and $R_2, R'_2$ are closed,
■ the selected respective sorbents and gases are introduced into the reactors $R_i$ and the reactors $R'_i$ so that the reactors $R_1$ and $R_2$ contain their respective sorbent in a form rich in gas $(B1,G_1)$ and $(B2,G_2)$, the reactors $R'_1$ and $R'_2$ are in a state to consume the respective gas $G_1$ and $G_2$, the reactor $R_3$ contains the sorbent in a form poor in gas B3, and the reactor $R'_3$ is in a state to supply the gas;

- during step a) the gas transfer means between the reactors $R_3,R'3$ on the one hand and the reactors $R_1,R'_1$ on the other are opened, thereby producing cold in $R'_3$;
- during step b), in a first phase, heat energy is added to $R'_1$ and communication is created between reactors $R_1,R'_1$ on the one hand and the reactors $R_2,R'_2$ on the other; in a second phase, heat energy is added to $R'_2$, a connection being then created between the reactors $R_2,R'_2$ on the one hand and the reactors $R_3,R'_3$ on the other, thereby causing the regeneration of the installation.

7. The method as claimed in claim 1 for producing heat at a temperature higher than that of a heat energy source, wherein, during step a) of production, heat energy is added to the installation by the reactor $R'_3$, and possibly by the reactor $R'_2$, before opening the gas exchange means between the reactors $R_3$ and $R'_3$ and possibly between the reactors $R_2$ and $R'_2$.

8. The method as claimed in claim 7 for producing heat at a given place using heat energy sources located at another place, wherein the heat source used for the regeneration step b) is the exergy of the heat produced at elevated temperature during step a).

9. The method for producing heat as claimed in one of claims 7 and 8, said mehode being put into practice in an installation which comprises an HP assembly comprising the reactors $R_1$ and $R'_1$ and an LP assembly comprising the reactors $R_3$ and $R'_3$, under the following conditions:

   - during a preliminary step,

       ■ the gas transfer means between $R_1$ and $R'_1$ on the one hand, between $R_3$ and $R'_3$ on the other, are closed,
       ■ the respective sorbents and gases are introduced into the reactors so that the reactor $R_1$ of the HP assembly contains the sorbent in a form rich in gas $(B1,G_1)$, the reactor $R'_1$ is in a state to consume the gas $G_1$, the reactor $R_3$ of the LP assembly contains the sorbent in a form poor in gas B3, and the corresponding reactor $R'_3$ is in a state to supply gas $G_3$,

   - during step a), heat energy is added to $R'_3$ to raise it to a temperature higher than the standard temperature, the gas transfer means are then opened between the reactors $R_3$ and $R'_3$ on the one hand, and the reactors $R_1$ and $R'_1$ on the other, thereby causing the production of heat in $R'_1$,
   - during step b), heat energy is added to $R'_1$ to raise it to a temperature higher than the standard temperature, the gas transfer means between the reactors $R_3$ and $R'_3$ on the one hand, and the reactors $R_1$ and $R'_1$ are then opened, thereby causing the regeneration of the installation.

10. The method for producing heat as claimed in one of claims 7 and 8, said method being put into practice in an installation which comprises three HP, LP and IP assemblies respectively comprising the reactors $R_1,R'_1$, $R_3,R'_3$ and $R_2,R'_2$, under the following conditions:

   - during a preliminary step,

       ■ the gas exchange means between the reactors $R_1,R'_1$, $R_3,R'_3$ and $R_2,R'_2$ are closed,
       ■ the selected respective sorbents and gases are introduced into the reactors so that the reactor $R_1$ contains the sorbent in a form rich in gas $(B1,G_1)$, the reactor $R'_1$ is in a state to consume the gas $G_1$, the reactors $R_3$ and $R_2$ contain their respective sorbent in a form poor in gas B3 and B2, and the reactors $R'_3$ and $R'_2$ are in a state to supply the respective gas $G_3$ and $G_2$,

   - during step a), heat energy is added to $R'_3$ and $R'_2$ to raise them to a temperature higher than the standard temperature, the gas exchange means are then opened between the reactors $R_3,R'_3$, the reactors $R_2,R'_2$, and the reactors $R_1,R'_1$, thereby causing the production of heat in $R'_1$,
   - during step b), heat energy is added to $R'_1$ to raise it to a temperature higher than the standard temperature, the gas transfer means are then opened between the reactors $R_3,R'_3$, the reactors $R_2,R'_2$ and the reactors $R_1$, $R'_1$, thereby causing the regeneration of the system.

11. The method for producing heat as claimed in one of claims 7 and 8, said method being put into practice in an installation which comprises three HP, LP and IP assemblies respectively comprising the reactors $R_1,R'_1$, $R_3,R'_3$ and $R_2,R'_2$, under the following conditions:

   - during a preliminary step:

       ■ the gas transfer means between the different reactors are closed,
       ■ the respective sorbents and gases are introduced into the reactors, at standard temperature, so that $R_1$ and $R_2$ contain their respective sorbent in the state rich in gas $(S1,G_1)$ and $(S2,G_2)$, $R_3$ contains the sorbent in the state poor in gas, $R'_1$ and $R'_2$ are in a state to consume the gas $G_1$ and the gas $G_2$ respectively, and $R'_3$ is in a state to liberate the gas $G_3$,

- during step a), heat energy is added to $R'_3$, the gas transfer means between the reactors $R_3,R'_3$ on the one hand and the reactors $R_1,R'_1$ on the other are then opened, thereby causing the production of heat in $R'_1$,
- during step b), in a first phase, heat energy is added to $R'_1$, the gas transfer means between the reactors $R_1$, $R'_1$ on the one hand and the reactors $R_2,R'_2$ on the other are then opened; in a second phase, heat energy is added to $R'_2$, the gas transfer means between the reactors $R_2,R'_2$ on the one hand and the reactors $R_3,R'_3$ on the other are then opened, thereby causing the regeneration of the system.

12. The method for producing heat as claimed in one of claims 7 and 8, said method being put into practice in an installation which comprises three HP, LP and IP assemblies respectively comprising the reactors $R_1,R'_1$, $R_3,R'_3$ and $R_2,R'_2$, under the following conditions:

- during a preliminary step,

  ■ the gas transfer means between the different reactors are closed,
  ■ the respective sorbents and gases are introduced into the reactors, at standard temperature, so that $R_2$ contains the sorbent in a state rich in gas $(S2,G_2)$, $R_3$ and $R_1$ contain their sorbent in a state poor in gas respectively B3 and B1, $R'_2$ is in a state to consume the gas $G_2$, and $R'_3$ and $R'_1$ are in a state to liberate the gas $G_3$ and $G_2$ respectively,

- during step a) in a first phase, heat energy is added to $R'_3$, a connection is then created between the reactors $R_3,R'3$ on the one hand, and the reactors $R_2,R'_2$ on the other, thereby causing the production of heat in $R'_2$; in a second phase, heat energy is added to $R'_2$, a connection is created between the reactors $R_1,R'_1$ on the one hand, and the reactors $R_2,R'_2$ on the other, thereby causing the production of heat in $R'_1$,
- during step b), heat energy is added to $R'_1$, the gas transfer means between the reactors $R_1,R'_1$ on the one hand and the reactors $R_3,R'_3$ on the other are then opened, thereby causing the regeneration of the installation.

13. The method as claimed in claim 1, wherein the reversible process in the reactors $R'_i$ is a liquid/gas phase change, an adsorption of a gas in a solid, an absorption of a gas in a liquid, a chemical reaction between a gas and a solid or a liquid, or the formation of clathrate hydrates.

14. The method as claimed in claim 1, wherein the reversible phenomenon in the reactors $R_i$ is an adsorption of a gas in a solid, an absorption of a gas in a liquid, a chemical reaction between a gas and a solid or a liquid, or the formation of clathrate hydrates.

15. The method as claimed in claim 1, wherein the reversible phenomenons in all the assemblies of the installation involve the same gas.

**Patentansprüche**

1. Verfahren zur Erzeugung von Kälte und/oder Wärme an einem bestimmten Ort aus einer oder mehreren Quellen thermischer Energie, das eine Abfolge reversibler Phänomene zwischen einem Gas und einer Flüssigkeit oder einem Feststoff umfasst, wobei das Verfahren in einer Anlage umgesetzt wird, die eine HP-Gruppe umfasst, die Reaktoren $R_1$ und $R'_1$ umfasst, eine BP-Gruppe, die Reaktoren $R_3$ und $R'_3$ umfasst und eventuell eine PI-Gruppe, die Reaktoren $R_2$ und $R'_2$ umfasst, wobei jeder Reaktor $R_i$ der Sitz einer reversiblen Sorption ist, die abwechselnd das Gas $G_i$ produziert und verbraucht, wobei jeder Reaktor $R'_i$ der Sitz eines reversiblen Phänomens ist, das abwechselnd das Gas $G_i$ produziert und verbraucht, wobei die jeweiligen Sorptionsmittel und Gase in den Reaktoren derart ausgewählt sind, dass bei einem bestimmten Druck die Gleichgewichtstemperatur der Sorption im Reaktor $R_i$ einer Gruppe höher ist als die Gleichgewichtstemperatur des reversiblen Phänomens im Reaktor $R'_i$ derselben Gruppe, wobei die Gleichgewichtstemperatur der Sorption im Reaktor $R_1$ niedriger ist als die in $R_3$ und gegebenenfalls die Gleichgewichtstemperatur der Sorption in $R_2$ zwischen den Gleichgewichtstemperaturen in $R_1$ und $R_3$ ist, wobei die Reaktoren $R_i$ und $R'_i$ einer Gruppe mit Mitteln zum Austausch des Gases $G_i$ ausgestattet sind, die Reaktoren $R_i$ mit Mitteln zum Austausch von Wärme zwischen ihnen ausgestattet sind und die Reaktoren vom atmosphärischen Druck isoliert sind, wobei das Verfahren umfasst:

- die zum Betrieb der Anlage notwendigen Quellen thermischer Energie versorgen die Reaktoren $R'_1$, $R'_3$ und gegebenenfalls $R'_2$,
- es umfasst:

• einen vorbereitenden Schritt, bei dem die Mittel zum Austausch von Gas zwischen zwei Reaktoren einer Gruppe geschlossen sind und die jeweiligen Sorptionsmittel und Gase bei normaler Temperatur in die Reaktoren eingeführt werden, so dass der Reaktor $R_1$ der HP-Gruppe das Sorptionsmitel in gasangereicherter Form $(B1, G_1)$ enthält, der Reaktor $R'_1$ imstande ist, das Gas $G_1$ zu verbrauchen, der Reaktor $R_3$ der BP-Gruppe das Sorptionsmittel in gasabgereicherter Form B3 enthält und der entsprechende Reaktor $R'_3$ imstande ist, Gas $G_3$ zu liefern,

• einen Schritt a) der Erzeugung von Kälte oder von Wärme, bei dem die Mittel zum Gasaustausch zwischen den Reaktoren $R_3$ und $R'_3$ einerseits, den Reaktoren $R_1$ und $R'_1$ und gegebenenfalls zwischen den Reaktoren $R_2$ und $R'_2$ geöffnet werden, eventuell nachdem der Reaktor $R'_3$ und gegebenenfalls $R'_2$ durch Zufuhr von Wärmeenergie auf eine Temperatur über der normalen Temperatur gebracht wurde,

• einen Schritt b) der Regeneration, bei dem die Mittel zum Gasaustausch zwischen den Reaktoren $R_3$ und $R'_3$ einerseits, den Reaktoren $R_1$ und $R'_1$ und gegebenenfalls zwischen den Reaktoren $R_2$ und $R'_2$ geöffnet werden, nachdem der Reaktor $R'_1$ und gegebenenfalls $R'_2$ durch Zufuhr von Wärmeenergie auf eine Temperatur über der normalen Temperatur gebracht wurde.

2. Verfahren nach Anspruch 1 zur Erzeugung von Kälte an einem bestimmten Ort aus Quellen thermischer Energie, die sich an einem anderen Ort befinden, wobei

• das Gas und die jeweiligen Sorptionsmittel in der BP-Gruppe oder den BP- und PI-Gruppen derart ausgewählt sind, dass bei dem jeweiligen Druck, der in $R'_3$ oder in $R'_3$ und $R'_2$ nach Öffnen der Mittel zum Gasaustausch in den Reaktoren entsteht, die Gleichgewichtstemperatur des reversiblen Phänomens in $R'_3$ oder in $R'_3$ und in $R'_2$ der Temperatur entspricht, bei der die Erzeugung von Kälte gewünscht ist,

• in Schritt a) der Erzeugung die Mittel zum Gasaustausch zwischen den Reaktoren ohne vorherige Zufuhr von Wärmeenergie in den Reaktor $R'_3$ oder in die Reaktoren $R'_3$ und $R'_2$ geöffnet werden.

3. Verfahren zur Erzeugung von Kälte nach Anspruch 2, wobei das Verfahren in einer Anlage umgesetzt wird, die die Gruppen HP und BP umfasst, unter den folgenden Bedingungen:

- in einem vorbereitenden Schritt

• sind die Mittel zum Gastransfer zwischen $R_1$ und $R'_1$ einerseits, zwischen $R_3$ und $R'_3$ andererseits geschlossen,

• werden die jeweiligen Sorptionsmittel und Gase derart in die Reaktoren eingeführt, dass der Reaktor $R_1$ der HP-Gruppe das Sorptionsmittel in gasangereicherter Form $(B1, G_1)$ enthält, der Reaktor $R'_1$ imstande ist, das Gas $G_1$ zu verbrauchen, der Reaktor $R_3$ der BP-Gruppe das Sorptionsmittel in gasabgereicherter Form $B_3$ enthält und der entsprechende Reaktor $R'_3$ imstande ist, Gas $G_3$ zu liefern,

• das Gas und die jeweiligen Sorptionsmittel in der BP-Gruppe derart ausgewählt sind, dass bei dem jeweiligen Druck, der in $R'_3$ nach Öffnen der Mittel zum Gasaustausch entsteht, die Gleichgewichtstemperatur des reversiblen Phänomens in $R'_3$ der Temperatur entspricht, bei der die Erzeugung von Kälte gewünscht ist,

- in Schritt a) die Mittel zum Gastransfer zwischen den Reaktoren R3 und R'3 einerseits und zwischen den Reaktoren R1 und R'1 andererseits geöffnet werden, was zur Erzeugung von Kälte in $R'_3$ führt,

- in Schritt b) $R'_1$ Wärmeenergie zugeführt wird, um ihn auf eine Temperatur über der normalen Temperatur zu bringen, danach die Mittel zum Gastransfer zwischen den Reaktoren $R_3$ und $R'_3$ einerseits und zwischen den Reaktoren $R_1$ und $R'_1$ andererseits geöffnet werden, wodurch die Anlage regeneriert wird.

4. Verfahren zur Erzeugung von Kälte nach Anspruch 2, wobei das Verfahren in einer Anlage umgesetzt wird, die drei Gruppen HP, BP und PI umfasst, die jeweils die Reaktoren $R_1$, $R'_1$, $R_3$, $R'_3$ und $R_2$, $R'_2$ umfassen, unter den folgenden Bedingungen:

- in einem vorbereitenden Schritt

• werden die Mittel zum Gasaustausch zwischen den Reaktoren $R_1$, $R'_1$, $R_3$, $R'_3$ und $R_2$, $R'_2$ $R_1$ geschlossen,

• werden die jeweiligen Sorptionsmittel und Gase derart in die Reaktoren eingeführt, dass der Reaktor $R_1$ der HP-Gruppe das Sorptionsmittel in gasangereicherter Form $(B1, G_1)$ enthält, der Reaktor $R'_1$ imstande ist, das Gas $G_1$ zu verbrauchen, die Reaktoren $R_3$ und $R_2$ der Gruppen BP und PI ihr Sorptionsmittel in gasabgereicherter Form, jeweils B3 und B2, enthalten und die Reaktoren $R'_3$ und $R'_2$ imstande sind, die

jeweiligen Gase $G_3$ und $G_2$ zu liefern,

• das Gas und die jeweiligen Sorptionsmittel in den Gruppen BP und PI derart ausgewählt sind, dass bei den jeweiligen Drücken, die in $R'_3$ und $R'_2$ nach Öffnen der Mittel zum Gasaustausch entstehen, die Gleichgewichtstemperaturen der jeweiligen reversiblen Phänomene in $R'_2$ und $R'_3$ den Temperaturen entsprechen, bei denen die Erzeugung von Kälte gewünscht ist,

- in Schritt a) die Mittel zum Gasaustausch zwischen den Reaktoren $R_1$, $R'_1$, $R_3$, $R'_3$ und $R_2$, $R'_2$ $R_1$ geöffnet werden, was zur Erzeugung von Kälte in $R'_3$ und in $R'_2$ führt,
- in Schritt b) $R'_1$ Wärmeenergie zugeführt wird, danach die Mittel zum Gasaustausch zwischen den Reaktoren $R_1$, $R'_1$, $R_3$, $R'_3$ und $R_2$, $R'_2$ $R_1$ geöffnet werden, was zur Regeneration der Anlage führt.

5. Verfahren zur Erzeugung von Kälte nach Anspruch 2, wobei das Verfahren in einer Anlage umgesetzt wird, die drei Gruppen HP, BP und PI umfasst, die jeweils die Reaktoren $R_1$, $R'_1$, $R_3$, $R'_3$ und $R_2$, $R'_2$ umfassen, unter den folgenden Bedingungen:

- in einem vorbereitenden Schritt

• werden die Mittel zum Gasaustausch zwischen den Reaktoren $R_1$, $R'_1$, $R_3$, $R'_3$ und $R_2$, $R'_2$ $R_1$ geschlossen,
• werden die jeweiligen Sorptionsmittel und Gase derart in die Reaktoren eingeführt, dass die Reaktoren $R_1$ und $R_2$ ihr jeweiliges Sorptionsmittel in gasangereicherter Form (B1, $G_1$) und (B2, $G_2$) enthalten, die Reaktoren $R'_1$ und $R'_2$ imstande sind, das jeweilige Gas $G_1$ und $G_2$ zu verbrauchen, der Reaktor $R_3$ das Sorptionsmittel in gasabgereicherter Form B3 enthält und der Reaktor $R'_3$ imstande ist, das Gas zu liefern,

- in Schritt a) in einer ersten Phase die Mittel zum Gasaustausch zwischen den Reaktoren $R_3$, $R'_3$ einerseits und zwischen den Reaktoren $R_2$, $R'_2$ andererseits geöffnet werden, was zur Erzeugung von Kälte in $R'_3$ führt, in einer zweiten Phase die Mittel zum Gasaustausch zwischen den Reaktoren $R_1$, $R'_1$ einerseits und den Reaktoren $R_2$, $R'_2$ andererseits geöffnet werden, was zur Erzeugung von Kälte in $R'_2$ führt,
- in Schritt b) $R'_1$ Wärmeenergie zugeführt wird, um ihn auf eine Temperatur über der normalen Temperatur zu bringen, danach die Mittel zum Gastransfer zwischen den Reaktoren $R_1$, $R'_1$ einerseits und den Reaktoren $R_3$, $R'_3$ andererseits geöffnet werden, wodurch die Anlage regeneriert wird.

6. Verfahren zur Erzeugung von Kälte nach Anspruch 2, wobei das Verfahren in einer Anlage umgesetzt wird, die drei Gruppen HP, BP und PI umfasst, die jeweils die Reaktoren $R_1$, $R'_1$, $R_3$, $R'_3$ und $R_2$, $R'_2$ umfassen, unter den folgenden Bedingungen:

- in einem vorbereitenden Schritt

• werden die Mittel zum Gasaustausch zwischen den Reaktoren $R_1$, $R'_1$, $R_3$, $R'_3$ und $R_2$, $R'_2$ geschlossen,
• werden in die Reaktoren $R_i$ und die Reaktoren $R'_i$ die jeweiligen Sorptionsmittel und Gase eingeführt, die derart ausgewählt sind, dass die Reaktoren $R_1$ und $R_2$ ihr jeweiliges Sorptionsmittel in gasangereicherter Form (B1, $G_1$) und (B2, $G_2$) enthalten, die Reaktoren $R'_1$ und $R'_2$ imstande sind, das jeweilige Gas $G_1$ und $G_2$ zu verbrauchen, der Reaktor $R_3$ das Sorptionsmittel in gasabgereicherter Form B3 enthält und der Reaktor $R'_3$ imstande ist, das Gas zu liefern,

- in Schritt a) die Mittel zum Gastransfer zwischen den Reaktoren $R_3$, $R'_3$ einerseits und den Reaktoren $R_1$, $R'_1$ andererseits geöffnet werden, was zur Erzeugung von Kälte in $R'_3$ führt,
- in Schritt b) $R'_1$ in einer ersten Phase Wärmeenergie zugeführt wird und die Reaktoren R1, R'1 einerseits und die Reaktoren $R_2$, $R'_2$ andererseits in Kommunikation gebracht werden, in einer zweiten Phase $R'_2$ Wärmeenergie zugeführt wird, danach die Reaktoren $R_2$, $R'_2$ einerseits und die Reaktoren $R_3$, $R'_3$ andererseits verbunden werden, was zur Regeneration der Anlage führt.

7. Verfahren nach Anspruch 1 zur Erzeugung von Wärme in einer Temperatur, die über der einer Quelle von Wärmeenergie ist, wobei in Schritt a) der Erzeugung der Anlage vom Reaktor $R'_3$ und eventuell vom Reaktor $R'_2$ Wärmeenergie zugeführt wird, bevor die Mittel zum Gasaustausch zwischen den Reaktoren $R_3$ und $R'_3$ und eventuell zwischen den Reaktoren $R_2$ und $R'_2$ geöffnet werden.

8. Verfahren nach Anspruch 7 zur Erzeugung von Wärme an einem bestimmten Ort aus Quellen von Wärmeenergie, die sich an einem anderen Ort befinden, wobei als Wärmequelle für Schritt b) der Regeneration die Energie der Wärme verwendet wird, die in hoher Temperatur in Schritt a) erzeugt wurde.

9. Verfahren zur Erzeugung von Wärme nach einem der Ansprüche 7 oder 8, wobei das Verfahren in einer Anlage umgesetzt wird, die eine HP-Gruppe umfasst, die die Reaktoren $R_1$ und $R'_1$ umfasst, und eine BP-Gruppe, die die Reaktoren $R_3$ und $R'_3$ umfasst, unter den folgenden Bedingungen:

- in einem vorbereitenden Schritt

• sind die Mittel zum Gastransfer zwischen $R_1$ und $R'_1$ einerseits, zwischen $R_3$ und $R'_3$ andererseits geschlossen,
• werden die jeweiligen Sorptionsmittel und Gase derart in die Reaktoren eingeführt, dass der Reaktor $R_1$ der HP-Gruppe das Sorptionsmittel in gasangereicherter Form (B1, $G_1$) enthält, der Reaktor $R'_1$ imstande ist, das Gas $G_1$ zu verbrauchen, der Reaktor $R_3$ der BP-Gruppe das Sorptionsmittel in gasabgereicherter Form B3 enthält und der entsprechende Reaktor $R'_3$ imstande ist, Gas $G_3$ zu liefern,

- in Schritt a) $R'_3$ Wärmeenergie zugeführt wird, um ihn auf eine Temperatur über der normalen Temperatur zu bringen, danach die Mittel zum Gastransfer zwischen den Reaktoren $R_3$ und $R'_3$ einerseits und den Reaktoren $R_1$ und $R'_1$ andererseits geöffnet werden, was zur Erzeugung von Wärme in $R'_1$ führt,
- in Schritt b) $R'_1$ Wärmeenergie zugeführt wird, um ihn auf eine Temperatur über der normalen Temperatur zu bringen, danach die Mittel zum Gastransfer zwischen den Reaktoren $R_3$ und $R'_3$ einerseits und den Reaktoren $R_1$ und $R'_1$ geöffnet werden, was zur Regeneration der Anlage führt.

10. Verfahren zur Erzeugung von Wärme nach einem der Ansprüche 7 oder 8, wobei das Verfahren in einer Anlage umgesetzt wird, die drei Gruppen HP, BP und PI umfasst, die jeweils die Reaktoren $R_1$, $R'_1$, $R_3$, $R'_3$ und $R_2$, $R'_2$ umfassen, unter den folgenden Bedingungen:

- in einem vorbereitenden Schritt

• werden die Mittel zum Gasaustausch zwischen den Reaktoren $R_1$, $R'_1$, $R_3$, $R'_3$ und $R_2$, $R'_2$ geschlossen,
• werden in die Reaktoren die jeweiligen Sorptionsmittel und Gase eingeführt, die derart ausgewählt sind, dass der Reaktor $R_1$ das Sorptionsmittel in gasangereicherter Form (B1, $G_1$) enthält, wobei der Reaktor $R'_1$ imstande ist, das Gas $G_1$ zu verbrauchen, die Reaktoren $R_3$ und $R_2$ ihr jeweiliges Sorptionsmittel in gasabgereicherter Form B3 und B2 enthalten und die Reaktoren $R'_3$ und $R'_2$ imstande sind, das jeweilige Gas $G_3$ und $G_2$ zu liefern,

- in Schritt a) $R'_3$ und $R'_2$ Wärmeenergie zugeführt wird, um sie auf eine Temperatur über der normalen Temperatur zu bringen, danach die Mittel zum Gasaustausch zwischen den Reaktoren $R_3$, $R'_3$, den Reaktoren $R_2$, $R'_2$ und den Reaktoren $R_1$ und $R'_1$ geöffnet werden, was zur Erzeugung von Wärme in $R'_1$ führt,
- in Schritt b) $R'_1$ Wärmeenergie zugeführt wird, um ihn auf eine Temperatur über der normalen Temperatur zu bringen, danach die Mittel zum Gastransfer zwischen den Reaktoren $R_3$, $R'_3$, den Reaktoren $R_2$, $R'_2$ und den Reaktoren $R_1$, $R'_1$ geöffnet werden, was zur Regeneration des Systems führt.

11. Verfahren zur Erzeugung von Wärme nach einem der Ansprüche 7 oder 8, wobei das Verfahren in einer Anlage umgesetzt wird, die drei Gruppen HP, BP und PI umfasst, die jeweils die Reaktoren $R_1$, $R'_1$, $R_3$, $R'_3$ und $R_2$, $R'_2$ umfassen, unter den folgenden Bedingungen:

- in einem vorbereitenden Schritt:

• werden die Mittel zum Gastransfer zwischen den verschiedenen Reaktoren geschlossen,
• werden die jeweiligen Sorptionsmittel und Gase bei normaler Temperatur derart in die Reaktoren eingeführt, dass die Reaktoren $R_1$ und $R_2$ ihr jeweiliges Sorptionsmittel in gasangereichertem Zustand (S1, $G_1$) und (S2, $G_2$) enthalten, $R_3$ das Sorptionsmittel in gasabgereichertem Zustand enthält, $R'_1$ und $R'_2$ imstande sind, jeweils das Gas $G_1$ und das Gas $G_2$ zu verbrauchen und $R_3$ imstande ist, das Gas $G_3$ freizusetzen,

- in Schritt a) $R'_3$ Wärmeenergie zugeführt wird, danach die Mittel zum Gastransfer zwischen den Reaktoren $R_3$, $R'_3$ einerseits und den Reaktoren $R_1$ und $R'_1$ andererseits geöffnet werden, was zur Erzeugung von Wärme in $R'_1$ führt,
- in Schritt b) $R'_1$ in einer ersten Phase Wärmeenergie zugeführt wird, danach die Mittel zum Gastransfer

zwischen den Reaktoren $R_1$, $R'_1$ einerseits und den Reaktoren $R_3$, $R'_3$ andererseits geöffnet werden, in einer zweiten Phase $R'_2$ Wärmeenergie zugeführt wird, danach die Mittel zum Gastransfer zwischen den Reaktoren $R_2$, $R'_2$ einerseits und den Reaktoren $R_3$, $R'_3$ andererseits geöffnet werden, was zur Regeneration des Systems führt.

12. Verfahren zur Erzeugung von Wärme nach einem der Ansprüche 7 oder 8, wobei das Verfahren in einer Anlage umgesetzt wird, die drei Gruppen HP, BP und PI umfasst, die jeweils die Reaktoren $R_1$, $R'_1$, $R_3$, $R'_3$ und $R_2$, $R'_2$ umfassen, unter den folgenden Bedingungen:

- in einem vorbereitenden Schritt

• werden die Mittel zum Gastransfer zwischen den verschiedenen Reaktoren geschlossen,
• werden die jeweiligen Sorptionsmittel und Gase bei normaler Temperatur derart in die Reaktoren eingeführt, dass $R_2$ das Sorptionsmittel in gasangereicherten Zustand (S2, $G_2$) enthält, $R_1$ und $R_2$ ihr jeweiliges Sorptionsmittel in gasabgereichertem Zustand B3 und B1 enthalten, $R'_2$ imstande ist, das Gas $G_2$ zu verbrauchen und $R'_3$ und $R'_1$ imstande sind, das jeweilige Gas $G_3$ und $G_2$ freizusetzen,

- in Schritt a) $R'_3$ in einer ersten Phase Wärmeenergie zugeführt wird, danach die Reaktoren $R_3$, $R'_3$ einerseits und die Reaktoren $R_2$, $R'_2$ andererseits verbunden werden, was zur Erzeugung von Wärme in $R'_2$ führt, in einer zweiten Phase $R'_2$ Wärmeenergie zugeführt wird, die Reaktoren $R_1$, $R'_1$ einerseits und die Reaktoren $R_2$, $R'_2$ andererseits verbunden werden, was zur Erzeugung von Wärme in $R'_1$ führt,
- in Schritt b) $R'_1$ Wärmeenergie zugeführt wird, danach die Mittel zum Gastransfer zwischen den Reaktoren $R_1$, $R'_1$ einerseits und den Reaktoren $R_3$, $R'_3$ andererseits geöffnet werden, was zur Regeneration der Anlage führt.

13. Verfahren nach Anspruch 1, wobei das reversible Phänomen in den Reaktoren $R'_i$ ein Phasenwechsel Flüssigkeit/Gas ist, eine Adsorption eines Gases in einen Feststoff, eine Adsorption eines Gases in eine Flüssigkeit, eine chemische Reaktion zwischen einem Gas und einem Feststoff oder einer Flüssigkeit oder die Bildung von Gashydraten.

14. Verfahren nach Anspruch 1, wobei das reversible Phänomen in den Reaktoren $R_i$ eine Adsorption eines Gases in einen Feststoff, eine Adsorption eines Gases in eine Flüssigkeit, eine chemische Reaktion zwischen einem Gas und einem Feststoff oder einer Flüssigkeit oder die Bildung von Gashydraten ist.

15. Verfahren nach Anspruch 1, wobei die reversiblen Phänomene in allen Gruppen der Anlage dasselbe Gas verwenden.

FIG.1

FIG.2

FIG.3

FIG. 4

**FIG.5**

**FIG.6**

FIG.7

FIG.8

FIG.9

EP 1 432 953 B1

**FIG.10**

EP 1 432 953 B1

FIG.11

EP 1 432 953 B1

**FIG.12**

FIG.13

EP 1 432 953 B1

**EP 1 432 953 B1**

**RÉFÉRENCES CITÉES DANS LA DESCRIPTION**

**Documents brevets cités dans la description**

- US 4531374 A, Alefeld
- US 4523635 A
- US 4623018 A